# EUROPEAN PATENT SPECIFICATION

(11) **EP 4 465 692 B1**
(45) Date of publication and mention of the grant of the patent: **25.03.2026**
(21) Application number: 23742785.1
(22) Date of filing: 12.01.2023
(51) Int. Cl.: H04W 36/00

(54) **ELECTRONIC DEVICE, METHOD FOR WIRELESS COMMUNICATION, AND COMPUTER-READABLE STORAGE MEDIUM**
ELEKTRONISCHE VORRICHTUNG, VERFAHREN ZUR DRAHTLOSEN KOMMUNIKATION UND COMPUTERLESBARES SPEICHERMEDIUM
DISPOSITIF ÉLECTRONIQUE, PROCÉDÉ DE COMMUNICATION SANS FIL ET SUPPORT D'ENREGISTREMENT LISIBLE PAR ORDINATEUR

(30) Priority: 19.01.2022 CN 202210060568
(43) Date of publication of application: 20.11.2024
(73) Proprietor: Sony Group Corporation, Tokyo 108-0075 (JP)
(72) Inventor: WANG, Xiaoxue, Beijing 100027 (CN); LI, Haojin, Beijing 100027 (CN); ZHOU, Mingtuo, Shanghai 200050 (CN)
(74) Representative: D Young & Co LLP
(86) International application number: PCT/CN2023/071887
(87) International publication number: WO 2023/138470

(56) References cited:
- EP-A1- 4 197 232
- WO-A1-2021/068151
- WO-A1-2021/189359
- WO-A1-2021/189359
- CN-A- 111 356 192
- US-A1- 2020 178 135
- US-A1- 2021 376 915
- US-A1- 2021 376 915

## Description

### FIELD

The present application relates to the technical field of wireless communication, and more specifically, to an electronic device, a method for wireless communication, and a computer-readable storage medium, that are conducive to selecting a primary base station and a secondary base station suitable for serving a user equipment.

### BACKGROUND

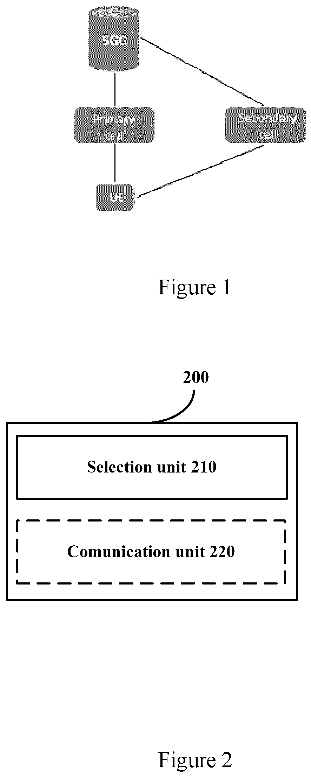

The fifth generation mobile communication technology (5G) can support multiple connections (or multi-connection) to transmit large-capacity data. In multi-connection, one cell (for example, the primary cell of a base station) serves as the primary cell (Primary Cell), and one or more other cells (for example, the primary cells of one or more other base stations) serve as secondary cells (Secondary Cell), so that as shown in the example of Figure 1, data can be transmitted in multi-connection between the network side device 5GC and the user equipment UE through multiple cells. This greatly increases the overall data transmission rate and helps meet the needs of high-speed transmission.

In a non-ground network, for example, when a user device downloads a video file or other large file, the network may have a large amount of data to transmit to the user device. In this case, multiple connections such as those using carrier aggregation (CA) can provide higher network speed and transmission traffic, and can help user equipment complete the transmission of scheduled data in a shorter time.

Therefore, it is expected that multiple connections can be appropriately applied to user equipment in a non-ground network, and in particular, it is expected that a suitable primary cell and secondary cell can be selected for the user equipment.

Prior art includes: WO 2021/189359 A1, and US 2021/376915 A1.

In particular, WO 2021/189359 A1 describes a base station serving UE(s) which receives validity time information for cell(s) formed by other base station(s). The validity time information indicates at least a time period when corresponding cells are available for use by the UE(s). The base station determines action(s) to perform for the UE(s) based on the validity time information. A UE receives, from a base station, validity time for cell(s) formed by other base station(s). The UE performs action(s) based on the validity time of the cell(s).

Furthermore, EP 4 197 232 A1 is prior art under Article 54(3) EPC and is relevant only for novelty.

### SUMMARY

A brief summary of the present disclosure is provided below, in order to provide a basic understanding of certain aspects of the present disclosure. It should be understood, however, that this summary is not an exhaustive summary of the present disclosure. It is neither intended to determine key or important parts of the present disclosure, nor intended to limit a scope of the present disclosure. A purpose of the summary is only to provide some concepts in a simplified manner, serving as a preamble of a more detailed description described later.

The invention is defined by the appended claims.

Other aspects of the embodiments of the present disclosure are set forth in the following description, in which preferred embodiments for fully disclosing the embodiments of the present disclosure are described in detail without being limited thereto.

### BRIEF DESCRIPTION OF THE DRAWINGS

The drawings described herein are for illustrating selected embodiments only rather than all possible implementations, and are not intended to limit the scope of the present disclosure. In the drawings:
Figure 1 is a schematic diagram for illustrating multiple connections in a 5G network;
Figure 2 is a block diagram showing a first configuration example of an electronic device according to a first embodiment of the present disclosure;
Figure 3 is a schematic diagram for illustrating an example of a candidate primary base station and a candidate secondary base station;
Figure 4 is a schematic diagram for illustrating an example of selecting a primary base station and a secondary base station based on an estimated connection time;
Figures 5A to 5F are schematic diagrams for illustrating examples of selected primary base stations and secondary base stations;
Figure 6 is a block diagram showing a second configuration example of the electronic device according to the first embodiment of the present disclosure;
Figure 7 is a schematic diagram for illustrating an example of selecting a candidate primary base station and a candidate secondary base station based on estimated connection quality;
Figure 8 is a block diagram showing a third configuration example of the electronic device according to the first embodiment of the present disclosure;
Figure 9 is a block diagram showing a first configuration example of an electronic device according to a second embodiment of the present disclosure;
Figure 10 is a block diagram showing a second configuration example of an electronic device according to a second embodiment of the present disclosure;
Figure 11 is a flowchart for explaining an example of a process of a data transmission process utilizing an embodiment of the present disclosure;
Figure 12 is an example flow chart for illustrating an example signaling interaction of a process for selecting a primary base station and a secondary base station based on an estimated connection time;
Figure 13 is an example flow chart of an example signaling interaction for illustrating a process of determining whether a current serving base station is suitable as a primary base station;
Figure 14 is a flowchart of an example signaling interaction for illustrating a process of determining a primary base station and a secondary base station based on measuring signal quality;
Figure 15 is a flowchart for illustrating an example signaling interaction of a process for determining a subsequent secondary base station based on measured signal quality;
Figure 16 is a flowchart showing a process example of a method for wireless communication according to the first embodiment of the present disclosure;
Figure 17 is a flowchart showing a process example of a method for wireless communication according to a second embodiment of the present disclosure;
Figure 18 is a block diagram showing an example of a schematic configuration of a server to which the technology of the present disclosure may be applied;
Figure 19 is a block diagram showing a first example of a schematic configuration of an eNB to which the technology of the present disclosure may be applied;
Figure 20 is a block diagram showing a second example of a schematic configuration of an eNB to which the technology of the present disclosure may be applied;
Figure 21 is a block diagram showing an example of a schematic configuration of a smartphone to which the technology of the present disclosure may be applied; and
Figure 22 is a block diagram showing an example of a schematic configuration of a car navigation device to which the technology of the present disclosure may be applied.

Although various modifications and alternations are easily made to the present disclosure, specific embodiments of the present disclosure are shown in the drawings by examples, and are described in detail herein. It should be understood that description for the specific embodiments herein is not intended to limit the present disclosure to the specific form as disclosed.

### DETAILED DESCRIPTION OF THE EMBODIMENTS

Examples of the present disclosure are fully disclosed with reference to the drawings. The following description is merely illustrative and is not intended to limit the present disclosure and applications or usage thereof.

Exemplary embodiments are provided, so that the present disclosure becomes thorough and the scope thereof is fully conveyed to those skilled in the art. Numerous specific details such as examples of specific components, devices and methods are set forth to provide a thorough understanding of embodiments of the present disclosure. It is apparent for those skilled in the art that, exemplary embodiments may be implemented in various ways without these specific details, which should not be constructed as limiting the scope of the present disclosure. In some exemplary embodiments, well-known processes, structures and technologies are not described in detail.

Description is made in the following order:
1. Overview of the problem
2. Configuration Example of Electronic Device of First Embodiment (Network Side Device)
   2.1 First Configuration Example
   2.2 Second Configuration Example
   2.3 Third Configuration Example
   2.4 Fourth Configuration Example
3. Configuration Example of Electronic Device of Second Embodiment (Terminal Side Device)
   3.1 First Configuration Example
   3.2 Second Configuration Example
4. Example Process
5. Method Embodiments
6. Application Examples

### <1. Overview of the Problem>

As mentioned above, it is expected that multiple connections can be appropriately applied to user equipment in a non-ground (or non-terrestrial) network, including selecting a suitable primary cell and secondary cell or a suitable primary base station and secondary base station for the user equipment.

However, in the current multi-connection technology, it is not considered that the available time or connection time of the selected primary cell/secondary cell is too short, resulting in the need to switch the primary cell and/or secondary cell during the multi-connection process, which in turn affects the transmission quality. In a non-terrestrial network, the above situation may occur when a non-transparent satellite base station moving relative to the ground (such as but not limited to a medium earth orbit (MEO) or low earth orbit (LEO) non-transparent satellite base station) is used as a primary base station or a secondary base station. For example, if the scheduled data is not transmitted within the available time of the primary base station/secondary base station as a non-transparent satellite base station moving relative to the ground, it may be necessary to switch the primary cell and/or secondary cell of the user equipment, which may have a significant impact on the transmission quality.

In view of the above problems, the inventors proposed a solution for selecting a primary base station and a secondary base station suitable for serving user equipment in a non-ground network based on the estimated connection time of the candidate primary base station and the candidate secondary base station, thereby avoiding the transmission quality being affected by the short connection time of a non-transparent satellite base station moving relative to the ground.

### <2.Configuration Example of Electronic Device of First Embodiment>

### [2.1 First configuration example]

FIG. 2 is a block diagram showing a first configuration example of the electronic device according to the first embodiment of the present disclosure.

As shown in FIG. 2, the electronic device 200 may include a selection unit 210 and an optional communication unit 220.

Here, each unit of the electronic device 200 may be included in a processing circuitry. It should be noted that the electronic device 200 may include one processing circuit or multiple processing circuits. Further, the processing circuit may include various discrete functional units to perform various different functions and/or operations. It should be noted that these functional units may be physical entities or logical entities, and units with different names may be implemented by the same physical entity.

The electronic device 200 is a device on the network side. As an example, the electronic device 200 may be a core network device, such as a core network device in a 5G network. Alternatively, the electronic device 200 may be an electronic device attached to a core network device. In the following, for the convenience of description, the electronic device 200 is described as a core network device itself, but those skilled in the art will understand that the embodiments of the present disclosure are not limited to this.

According to an embodiment of the present disclosure, the selection unit 210 of the electronic device 200 can select a primary base station and a secondary base station suitable for serving the user equipment based on the estimated connection time of the candidate primary base station and the candidate secondary base station, wherein the candidate primary base station and the candidate secondary base station include at least one non-transparent satellite base station that moves relative to the ground. Optionally, the candidate primary base station and the candidate auxiliary base station may also include other base station devices besides the non-transparent satellite base station that moves relative to the ground, such as but not limited to geosynchronous orbit (GEO) non-transparent satellite base stations, LEO/MEO transparent satellite-connected ground base stations, ground base stations, high altitude platforms (HAPS), and the like. Preferably, the selection unit 210 may select a candidate primary base station and a candidate secondary base station with an estimated connection time as long as possible, so as to avoid or minimize cell switching during the multi-connection process. The optional communication unit 220 of the electronic device 200 may communicate with other devices (such as but not limited to a candidate primary base station, a candidate secondary base station, a user equipment, etc.).

For example, the selection unit 210 may select all possible primary base stations as candidates for primary base stations, and select all possible secondary base stations of each possible primary base station as candidates for secondary base stations. In one example, the selection unit 210 can select a device that can be used as a switching target in the cell switching process of the user equipment and can realize the base station function as a candidate for primary base stations in accordance with the principle of selecting a base station for the user equipment in a general cell switching process, and then select a device that can realize the base station function, for example, within a certain distance from each candidate for primary base stations as a secondary base station. The selection unit 210 may determine the candidate for the primary/secondary base station by using various existing methods according to the above principles, which will not be described in detail here. The selection unit 210 may directly use these candidates for the primary/secondary base stations as candidate primary/secondary base stations. Alternatively, as in a second configuration described later, some primary/secondary base stations selected from the candidates for primary/secondary base stations may be used as candidate primary/secondary base stations (described in detail later).

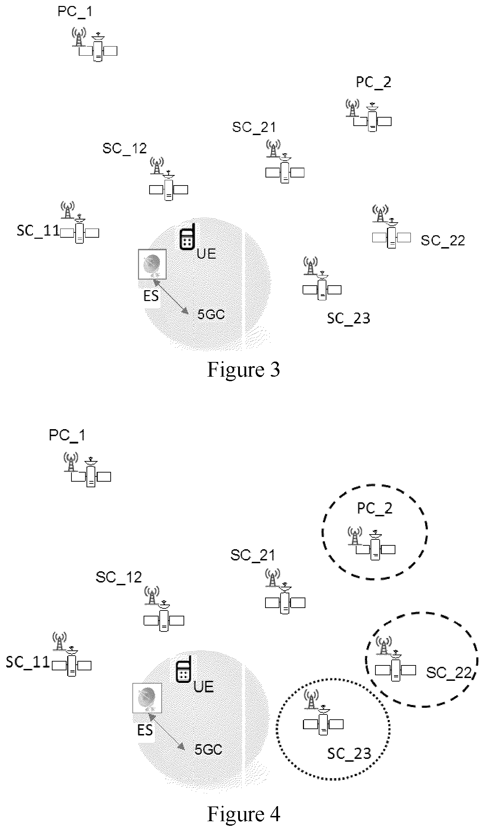

Figure 3 is a schematic diagram for illustrating an example of a candidate for a primary base station and a candidate for a secondary base station. As shown in Figure 3, for example, the core network device 5GC having the function of the electronic device 200 communicates with the ground station ES in the satellite communication network and, for example, communicates with each device in the non-ground network, and determines a candidate for a primary base station PC i and a corresponding candidate for a secondary base station SC_ij for the ground user equipment UE, where i represents the serial number of the primary base station, j represents the serial number of the secondary base station, i=1,2 and j=1,2 (when i=1) or j=1,2,3 (when i=2). In the example of Figure 3, for ease of explanation, each candidate for a primary/secondary base station is a MEO/LEO non-transparent satellite base station, which is shown as an example of a non-transparent satellite base station moving relative to the ground, but the present disclosure is not limited thereto. In this configuration example, the selection unit 210 directly selects each candidate for a primary/secondary base station as a candidate primary/secondary base station, so PC_i and SC_ij in Figure 3 are also referred to as a candidate primary base station and a candidate secondary base station in this configuration example.

The selection unit 210 can, for example, obtain an estimated connection time for candidate primary base stations and candidate secondary base stations when the electronic device 200, which is a network-side device (e.g., a core network device), wants to transmit a large amount of data to a user device and expects to establish multiple connections for data transmission, and select a primary base station and a secondary base station suitable for serving the user device for multiple connections based on the estimated connection time.

Optionally, the selection unit 210 can control the communication unit 220 of the electronic device 200 to send a notification to the user equipment (and optionally to the selected primary base station and secondary base station) about the primary base station and secondary base station selected for the user equipment and suitable for serving the user equipment, so as to facilitate the device receiving the notification to perform corresponding subsequent processing.

In an example, the primary base station and the secondary base station selected by the selection unit 210 are the primary base station and the secondary base station to be used in the multiple connections. At this time, the notification about the selected primary base station and secondary base station sent by the communication unit 220 can, for example, enable the user equipment to switch to the selected primary base station (primary cell), enable the selected primary base station to establish a connection with the selected secondary base station, and enable the selected secondary base station to establish a connection with the user equipment, and thus multi-connection data transmission is performed.

In another example, the primary base station and the secondary base station selected by the selection unit 210 still need to undergo a subsequent final determination, such as a final determination based on measured signal quality as in the third configuration described later. At this time, the notification about the selected primary base station and secondary base station sent by the communication unit 220 may, for example, enable the user equipment, the selected primary base station and secondary base station to perform processing related to the subsequent final determination, which will be described in detail later.

### (Example of Estimated Connection Time)

In an example, the estimated connection time considered by the selection unit 210 of the electronic device 200 may include a first connection time between the candidate primary base station and the user equipment and a second connection time between the candidate primary base station and the candidate secondary base station. For example, in the example of Figure 3, the estimated connection time for the candidate primary base station PC_i and its candidate secondary base station SC_ij may include a first connection time Ta_i between PC_i and the UE and a second connection time Tb_ij between PC_i and SC_ij.

In a further preferred example, the estimated connection time may further include a third connection time between the candidate secondary base station and the user equipment. For example, in the example of Figure 3, the estimated connection time for the candidate primary base station PC_i and its candidate secondary base station SC_ij may also include a third connection time Tc_ij between SC_ij and the UE.

### (Example process for selecting primary and secondary base stations based on estimated connection time)

The selection unit 210 of the electronic device 200 can select a primary base station and a secondary base station suitable for serving the device based on the estimated connection time, i.e., the first, second, and optional third connection time mentioned above, in various appropriate ways.

First, an example process in which the selection unit 210 performs selection based only on the first and second connection times is described. In an example, if there are a candidate primary base station and a candidate secondary base station having both the largest first and second connection times, the selection unit 210 may, for example, directly select the candidate primary base station and the candidate secondary base station as the final primary base station and secondary base station. If the above-mentioned candidate primary base station and candidate secondary base station do not exist, for example, the selection unit 210 can first select several candidate primary base stations with the largest first connection time; then, the selection unit 210 can select the candidate primary base station with the largest one or more second connection times or the largest sum of one or more first and second connection times from these candidate primary base stations, and its corresponding one or more candidate secondary base stations.

Next, a further preferred example process in which the selection unit 210 performs selection further based on the third connection time is described. In a preferred example, for example, the selection unit 210 may first perform a preliminary selection of candidate primary base stations and candidate secondary base stations based on the first and second connection times in a manner similar to the above-mentioned example; then, from the preliminarily selected candidate primary base stations and candidate secondary base stations, the selection unit 210 may select the candidate primary base station with the highest one or more third connection times or the highest one or more sums of first, second, and third connection times and its corresponding one or more candidate secondary base stations as the finally selected primary base station and secondary base station.

For the simplified case of only two candidate primary base stations as shown in Figure 3, the selection unit 210 may perform the selection based on the first, second and optional third connection times through a simplified process. For example, assume that the first connection time of each of the candidate primary base stations PC_1 and PC_2 satisfies Ta_2>Ta_1, and the second connection time of each candidate secondary base station SC_21, SC_22, SC_23 of the candidate primary base station PC_2 with the highest first connection time satisfies Tb_22>Tb_23>Tb_21, and the third connection time thereof satisfies Tc_22>Tc_23>Tc_21. At this time, the selection unit 210 can select PC_2 with the highest first connection time as the primary base station, and select its candidate secondary base station SC_22 with the highest second connection time (and optionally the highest third connection time) as the final secondary base station, or select its candidate secondary base stations SC_22 and SC23 with the highest two second connection times (and optionally the highest two third connection times) as the final secondary base stations. Figure 4 is a schematic diagram for explaining an example of selecting a primary base station and a secondary base station based on an estimated connection time, which shows the primary base station PC_2 and the secondary base station SC_22, as well as an optional secondary base station SC_23, selected after the selection process of the selection unit 210.

In the above examples, the selection unit 210 selects a primary base station and a secondary base station for the user equipment based at least on the first and second connection times. This selection method not only takes into account the possible connection time between the candidate primary base station and the user equipment, but also takes into account the possible connection time between the candidate primary and secondary base stations. This is not only conducive to avoiding or minimizing the frequent switching of the primary cell (primary base station) caused by the relative movement between the primary base station and the user equipment, but also conducive to avoiding or minimizing the frequent switching of the secondary cell caused by the loss of connection between the secondary base station and the primary base station due to the relative movement between the primary and secondary base stations, thereby improving the transmission quality of multiple connections. In a further preferred example, the selection unit 210 selects a primary base station and a secondary base station for the user equipment further based on the third connection time, i.e., further considers the possible connection time between the candidate secondary base station and the user equipment, thereby facilitating avoiding or minimizing frequent switching of secondary cells due to relative movement between the secondary base station and the user equipment, for example, and thereby facilitating further improving transmission quality. Note that in non-ground networks, the amplitude of relative movement between the primary and secondary base stations is often greater than the amplitude of relative movement between the primary or secondary base station and the user equipment. Therefore, the primary base station and the secondary base station selected for the user equipment based only on the first and second connection times will also most likely meet the requirements for the third connection time, thereby achieving a great improvement in transmission quality.

### (Example process for obtaining connection time)

The selection unit 210 of the electronic device 200 may obtain the connection time including, for example, the first to third connection times mentioned above based on the relevant information of the user equipment, the candidate primary base station, and the candidate secondary base station in various appropriate ways.

As a first example, consider a case where at least one of two entities as connection targets is a non-transparent satellite base station that moves relative to the ground. At this time, the selection unit 210 can estimate the connection time between the two entities based on the position and transmission power (and optional beam information) of each entity and the ephemeris map of the non-transparent satellite base station.

For ease of description, in conjunction with the example of Figure 3, taking one of the two entities as a user equipment UE and the other entity as a LEO/MEO non-transparent satellite base station PC_1 as an example, the example process of the selection unit 210 obtaining the first connection time Ta_1 between the two is described. Here, for UE, the geographic location is L_{UE}, and the transmission power of the UE is P_{UE}. For the LEO/MEO non-transparent satellite base station PC_1, the spatial position is POS_{PC_1}, the transmission power is P_{PC_1}, and the ephemeris diagram is E_{PC_1}. The connection time between the UE and PC_1, that is, the time that PC_1 may serve the UE, is a function of the above parameters, expressed as Ta_1=f_{C}(L_{UE}, POS_{PC_1}, E_{PC_1}, P_{UE}, P_{PC_1}). Optionally, in the case where beam information (such as beam direction) B_{UE} and B_{PC_1} for UE and PC_1 is available, the function can be expressed as Ta_1=f_{C}'(L_{UE}, POS_{PC_1}, E_{PC_1}, P_{UE}, P_{PC_1}, B_{UE}, B_{PC_1}).

The selection unit 210 may determine the first connection time Ta_1 via various appropriate methods. For example, the selection unit 210 can calculate the general signal coverage range of each of UE and PC_1 based on the above parameters. That is, based on the geographic location L_{UE} and the transmit power P_{UE} (and optional beam information B_{UE} such as beam direction) of the UE, the selection unit 210 may calculate the signal coverage range of the UE; based on the spatial position POS_{PC_1} and the transmit power P_{PC_1} (and optional beam information B_{PC_1} such as beam direction) of PC_1, the selection unit 210 may calculate the signal coverage range of PC_1. The selection unit 210 may calculate, according to the ephemeris diagram E_{PC_1} of PC_1, the time from the time when UE and PC_1 both enter the signal coverage range of each other until one of them leaves the signal coverage range of the other party, and determine this calculated time as the connection time between the two.

The above exemplary processing of the selection unit 210 is also applicable to determining the second connection time between the candidate primary base station and the candidate secondary base station and the third connection time between the candidate secondary base station and the user equipment, which will not be described in detail here.

Optionally, in order to determine the connection time, the electronic device 200 can, for example, control the communication unit 220 via the selection unit 210 to communicate with candidate primary base stations, candidate secondary base stations, user equipment, etc. that serve as connection subjects, so as to obtain required information from these connection subjects, such as but not limited to the location, transmission power, ephemeris map, optional beam information, etc., of the connection subject. In one example, the electronic device 200 is implemented as a core network device, in which case it pre-stores ephemeris diagrams of various non-transparent satellite base stations moving relative to the ground, and thus does not need to obtain such information from the latter.

As a second example, consider a case where two entities as connection objects do not include a non-transparent satellite base station that moves relative to the ground. At this time, the selection unit 210 may directly estimate the connection time between the two entities as infinite. Such a connection subject may be, for example, a user device, or a GEO non-transparent satellite base station, a ground base station connected to a LEO/MEO transparent satellite, a ground base station, a high altitude platform HAPS, etc.

### (Example of selected primary and secondary base stations)

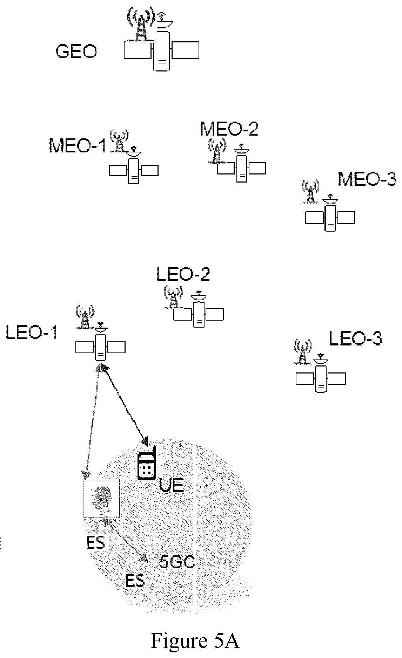

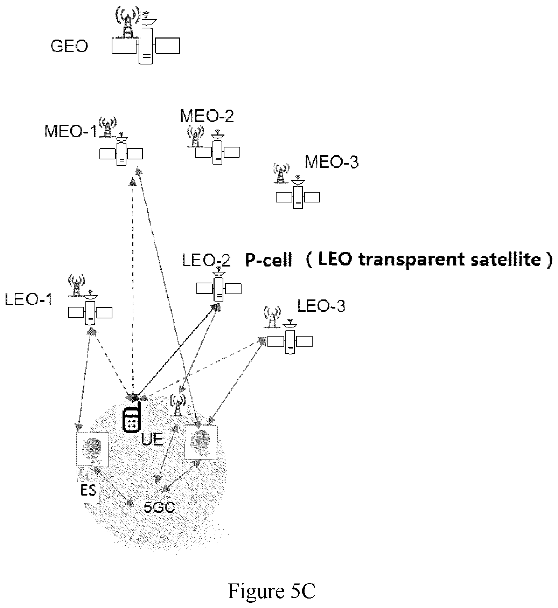

As mentioned above, the candidate primary base station and the candidate secondary base station may include at least one non-transparent satellite base station that moves relative to the ground, and may also include other base station devices, such as but not limited to GEO non-transparent satellite base stations, LEO/MEO transparent satellite-connected ground base stations, ground base stations, high-altitude platforms HAPS, and the like. Therefore, the primary base station and the secondary base station selected by the electronic device 200, for example, through the selection process of the selection unit 210, may also include the above-mentioned various devices. Examples of selected primary base stations and secondary base stations will be described below in conjunction with Figures 5A-5F.

Figures 5A to 5F are schematic diagrams for explaining examples of selected primary base stations and secondary base stations.

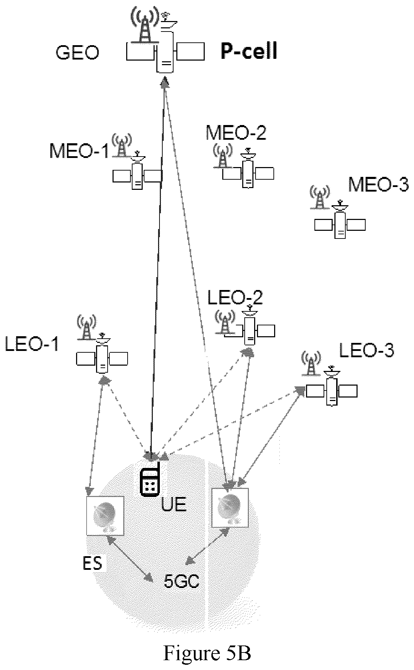

Figures 5A to 5F are schematic diagrams for explaining examples of selected primary base stations and secondary base stations. Figure 5A shows an example of a non-ground network, and shows a core network device 5GC, a ground station ES, multiple base stations GEO, MEO-1 to MEO-3, LEO-1 to LEO-3 and a ground user equipment UE, wherein, for example, the core network device 5GC having the function of an electronic device 200 communicates with the ground station ES (communicates with each base station via the ground station), and the LEO non-transparent satellite base station LEO-1 serves as the current serving base station of the UE. Figures 5B-5F show examples of a primary base station and a secondary base station selected by the electronic device 200, for example, through the selection unit 210, for the example situation of Figure 5A.

As shown in Figure 5B, in an example, a GEO non-transparent satellite base station GEO may be selected as a primary base station P-cell, and one or more other possible base stations (LEO non-transparent satellite base stations LEO-2, LEO-3) may be selected as secondary base stations.

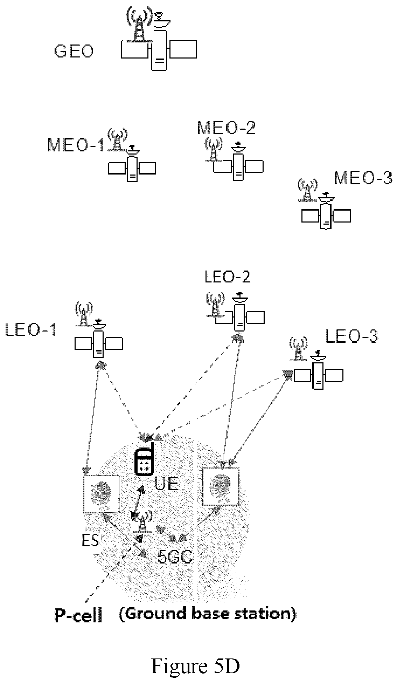

As shown in Figure 5D , in one example, a ground base station may be selected as a primary base station P-cell, and one or more other possible base stations (LEO non-transparent satellite base stations LEO-2, LEO-3) may be selected as secondary base stations.

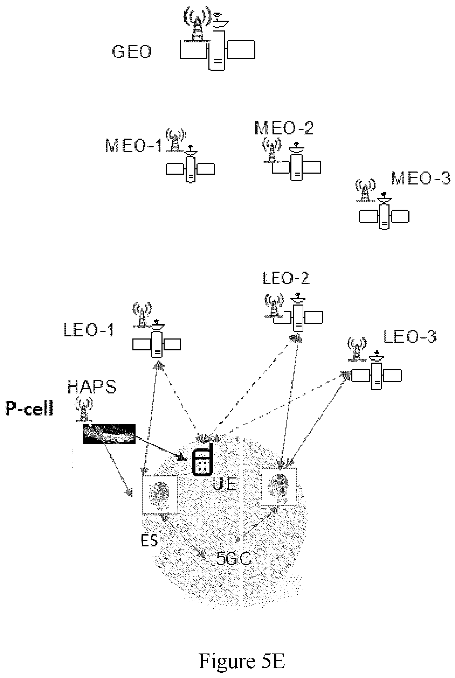

As shown in Figure 5E, in one example, a high altitude platform HAPS may be selected as a primary base station P-cell, and one or more other possible base stations (LEO non-transparent satellite base stations LEO-2, LEO-3) may be selected as secondary base stations.

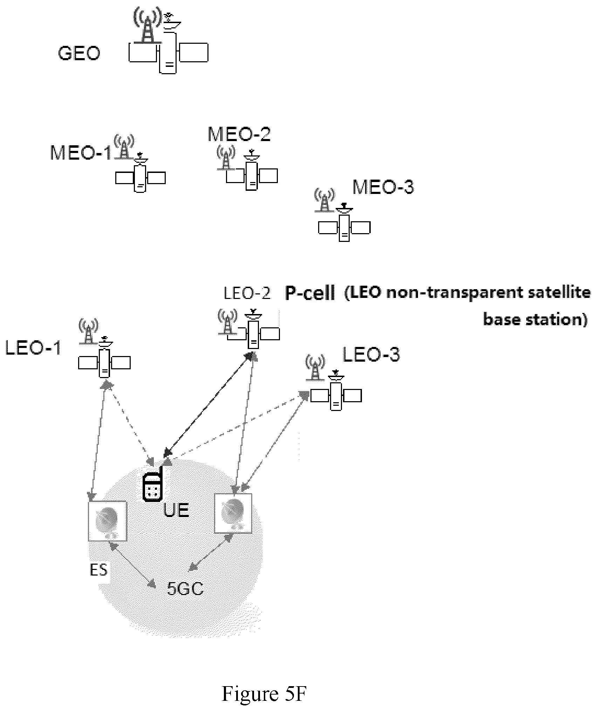

As shown in Figure 5F, in an example, another LEO/MEO non-transparent satellite base station LEO-2 other than the current serving base station can be selected as the primary base station P-cell, and one or more other possible base stations (LEO non-transparent satellite base station LEO-3) can be selected as secondary base stations.

(Example of example processing that gives priority to the current serving base station)

In the previous examples, such as the examples described with reference to Figure 3 and Figure 4, for ease of explanation, it is described that the selection unit 210 of the electronic device 200 obtains an estimated connection time for each of all candidate primary/secondary base stations and selects a primary/secondary base station suitable for serving the user equipment from all candidate primary/secondary base stations based on the estimated connection time.

In an example, the selection unit 210 of the electronic device 200 may give priority to the current serving base station and its possible secondary base stations as the candidate primary base station and candidate secondary base stations, and first obtain estimated connection times only for these base stations and determine whether they are suitable as primary/secondary base stations based on the estimated connection times. The selection unit 210 may, for example, perform the processing described above in conjunction with Figure 3 and Figure 4 on all candidate primary/secondary base stations only when the current serving base station and its possible secondary base stations are not suitable

More specifically, in this example, the selection unit 210 can determine whether the current serving base station can serve as a primary base station suitable for serving the user equipment based on the estimated connection time (first connection time) between the current serving base station, which is a non-transparent satellite base station moving relative to the ground, and the user equipment. For example, the selection unit 210 may determine whether the current serving base station is suitable as the primary base station based on a comparison between the estimated connection time and the estimated transmission time required for multi-connection data transmission using the current serving base station as the primary base station.

On the one hand, the selection unit 210 may adopt the method described in the first example of the "Example process for obtaining connection time" section above to obtain the estimated connection time between the current serving base station and the user equipment. For example, assuming that for the user equipment UE, the geographical location is L_{UE}, the transmission power is P_{UE}; for the current service base station P, which is a LEO/MEO non-transparent satellite base station, the spatial position is POS_{P}, the transmission power is P_{P}, and the ephemeris diagram is E_{P}. Then, the connection time between the UE and the current service base station P, that is, the time that the base station P may serve the UE, can be a function of the above parameters, expressed as T_{P}=f_{C}(L_{UE}, POS_{P}, E_{P}, P_{UE}; P_{P}).
On the other hand, the selection unit 210 can obtain the estimated transmission time Tₙ=f_{TR}(S_{d}, R_{P}, R_{S}) required for multi-connection data transmission using the current serving base station as the primary base station based on the size S_{d} of the data to be transmitted, the time-frequency resources R_{P} of the current serving base station as the primary base station, and the time-frequency resources Rs of the candidate secondary base stations of the primary base station. The selection unit 210 may obtain the candidate secondary base station of the primary base station in various appropriate ways, and may obtain the estimated transmission time in various appropriate ways.

As an example, the selection unit 210 can select one or more candidate secondary base stations from all candidate for a/candidate secondary base stations that can realize the base station function, for example, operate on an secondary frequency, and are within a certain distance from the current serving base station, based on their longest possible (second) connection time with the current serving base station and optionally based on their longest possible (third) connection time with the user equipment (preferably, select candidate secondary base stations whose second connection time and optional third connection time are greater than or equal to or as close to T_{P} as possible), wherein the specific calculation of the connection time can refer to the method described in the "Example process for obtaining connection time" section above, which will not be repeated here. After determining the candidate secondary base station, the selection unit 210 may adopt various appropriate methods, such as various existing methods, to obtain the estimated transmission time Tₙ=f_{TR}(S_{d}, R_{P}, R_{S}), which is not limited in the present disclosure.

After obtaining the estimated connection time (first connection time) T_{P} between the current serving base station and the user equipment and the estimated transmission time Tₙ required for multi-connection data transmission using the current serving base station as the primary base station, as an example, the selection unit 210 can judge and select the current serving base station as the primary base station suitable for serving the user equipment when T_{P} is greater than or equal to Tₙ, and select the secondary base station used when calculating the estimated transmission time Tₙ as the secondary base station suitable for serving the user equipment, thereby eliminating the need to obtain the estimated connection time for each of all candidate primary/secondary base stations and select the primary/secondary base station based on the estimated connection time. This helps to reduce processing load and/or reduce cell switching.

In addition, the selection unit 210 may determine that the current serving base station is not suitable as the primary base station when T_{P} is less than Tₙ. In this case, the selection unit 210 may obtain the estimated connection time for each of all candidate primary/secondary base stations and select the primary/secondary base station based on the estimated connection time in a manner similar to that described in the previous example. Note that in the subsequent processing of the selection unit 210, the current serving base station may be excluded from the candidate primary base stations, but the current serving base station may not be excluded as a candidate primary base station because it may still be the best choice among all candidate primary base stations.

Optionally, in order to determine whether the current serving base station is suitable as the primary base station, the electronic device 200 can, for example, control the communication unit 220 via the selection unit 210 to communicate with the current serving base station, user equipment, and possible secondary base stations as the connection subjects, so as to obtain information required to estimate the connection time from these connection subjects, such as but not limited to the location, transmission power, ephemeris map, optional beam information, etc. (and optionally, information required to estimate the transmission time, such as available time and frequency resources, etc.), of the connection subject. In one example, the electronic device 200 is implemented as a core network device, in which case it pre-stores ephemeris diagrams of various non-transparent satellite base stations moving relative to the ground, and thus does not need to obtain such information from the latter.

### [2.2 Second configuration example]

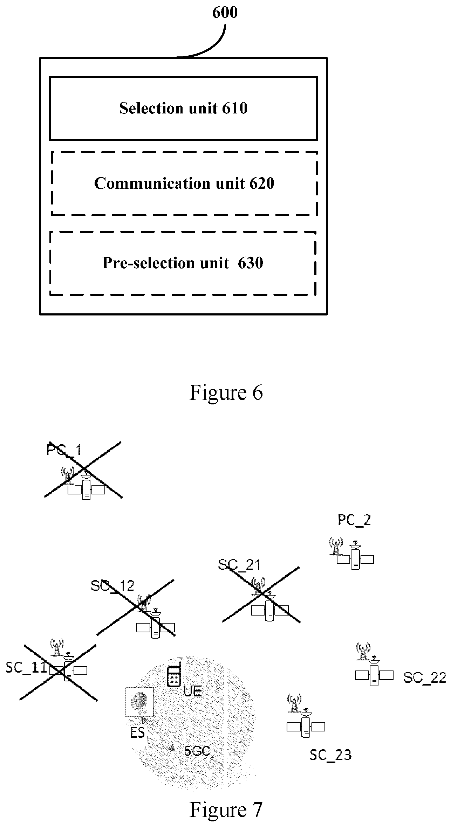

Figure 6 is a block diagram showing a second configuration example of the electronic device according to the first embodiment of the present disclosure.

As shown in Figure 6, in addition to units 610, 620 corresponding to the selection unit 210 and the optional communication unit 220 of Figure 2, the electronic device 600 may further include an optional pre-selection unit 630. Note that the units 610 and 620 of the electronic device 600 can perform functions similar to those of the corresponding units of the electronic device 200, and therefore, only the difference, namely, the pre-selection unit 630, is described herein. The pre-selection unit 630 may be configured to preselect a candidate primary base station and a candidate secondary base station from the candidates for primary base stations and the candidates for secondary base stations based on estimated connection qualities for the candidates for primary base stations and the candidates for secondary base stations.

Similar to the case of the first configuration example, the selection unit 610 may select all possible primary base stations as candidates for primary base stations, and select all possible secondary base stations of each possible primary base station as candidates for secondary base stations. Returning to the example of Figure 3, as shown in Figure 3, for example, the core network device 5GC having the function of an electronic device 600 communicates with the ground station ES in the satellite communication network and, for example, communicates with each device in the non-ground network, and determines an candidate for primary base station PC_i and a corresponding candidate for secondary base station SC_ij for the ground user equipment UE. The pre-selection unit 630 may pre-select candidate primary/secondary base stations based on the estimated connection qualities for these candidates for primary/secondary base stations.

### (Example of estimated connection quality)

In an example, the estimated connection quality considered by the pre-selection unit 630 of the electronic device 600 may include a first connection quality between the candidate for primary base station and the user equipment and a second connection quality between the candidate for primary base station and the candidate for secondary base station. For example, in the example of Figure 3, the estimated connection quality about the candidate for primary base station PC_i and its candidate for secondary base station SC_ij may include a first connection quality Qa_i between PC_i and the UE and a second connection quality Qb_ij between PC_i and SC_ij.

In a further preferred example, the estimated connection quality may further include a third connection quality between the candidate for secondary base station and the user equipment. For example, in the example of Figure 3 , the estimated connection quality about the candidate for primary base station PC_i and its candidate for secondary base station SC_ij may also include a third connection quality Qc_ij between SC_ij and the UE.

### (Example process for preliminary selection of primary and secondary base stations based on estimated connection quality)

The pre-selection unit 630 of the electronic device 600 may select the candidate primary and secondary base stations based on the estimated connection qualities, i.e., the first, second and optional third connection qualities mentioned above, in various appropriate ways.

In one example, the pre-selection unit 630 can, for example, pre-set appropriate thresholds regarding connection quality (e.g., a first threshold Qath, a second threshold Qbth, and an optional third threshold Qbth), and select the candidates for primary and secondary base stations whose first, second (and optional third) connection qualities are greater than the corresponding thresholds as candidate primary and secondary base stations. Alternatively, the pre-selection unit 630 may also select a candidate primary/secondary base station from among the candidate for primary/secondary base stations based on the first, second (and optional third) connection qualities, in a manner similar to the selection of the primary/secondary base station based on the first, second, and optional third connection times in the "Example process for selecting primary and secondary base stations based on estimated connection time" section in the first configuration example above.

For the example shown in Figure 3, it is assumed that the first connection qualities of the candidates for primary base stations PC_1 and PC_2 satisfy Qa_1<Qath, Qa_2>Qath respectively with respect to the first threshold Qath, the second connection qualities of the candidates for secondary base stations SC_21, SC_22, and SC_23 of the candidate for primary base station PC_2 whose first connection quality is higher than the first threshold satisfy Qb_21<Qbth, Qb_22>Qbth, Qb_23>Qbth respectively with respect to the second threshold Qbth, and the third connection qualities of SC_21, SC_22, and SC_23 satisfy Qc_21>Qcth, Qc_22>Qcth, Qc_23>Qcth respectively with respect to the third threshold Qcth. At this time, the pre-selection unit 630 may select the candidate for primary base station PC_2 and its candidates for secondary base stations SC_22 and SC_23 whose first and second (and optionally third) connection qualities are greater than corresponding thresholds as candidate primary and secondary base stations. Figure 7 is a schematic diagram for illustrating an example of selecting candidate primary and secondary base stations based on estimated connection qualities, which shows the result after the above-mentioned selection processing by the pre-selection unit 610 that excludes the candidate for primary base station PC_1 and all its candidates for secondary base stations whose first connection quality is lower than the first threshold, and excludes the candidate for secondary base station SC_21 whose second connection quality is lower than the second threshold, that is, the primary base station PC_2 and its secondary base stations SC_22 and SC_23 are preliminarily selected as candidate primary and secondary base stations.

Thereafter, for the candidate primary and secondary base stations selected by the pre-selection unit 630, the selection unit 610 may perform a selection process based on the estimated connection time similar to that of the selection unit 210 in the first configuration example, which will not be repeated here.

### (Example process for obtaining connection quality)

The pre-selection unit 630 of the electronic device 600 may obtain the connection quality including, for example, the first to third connection qualities mentioned above based on the relevant information of the user equipment, the candidate for primary base station, and the candidate for secondary base station in various appropriate ways.

As an example, the pre-selection unit 630 may estimate the connection quality between the two subjects based on the distance between the two subjects and the transmission power of each subject.

For ease of description, in conjunction with the example of Figure 3, taking one of the two entities (or subjects) as a user equipment UE and the other entity (or subject) as a LEO/MEO non-transparent satellite base station PC_1 as an example, the example process of the pre-selection unit 630 obtaining the first connection quality Qa_1 between the two is described. Here, for the UE, the geographical location is L_{UE}, and the transmission power is P_{UE}; for the LEO/MEO non-transparent satellite base station PC_1, the spatial position is POS_{PC_1}, and the transmission power is P_{PC_1}. The pre-selection unit 630 can obtain the distance between the two based on the positions L_{UE} of the UE and POS_{PC_1} of PC_1, and determine the received signal power or received signal quality (for example, received signal quality in the form of signal-to-noise ratio) of the UE's transmitted signal at PC_1 based on the UE's transmit power P_{UE} and the above distance, determine the received signal power or received signal quality (for example, received signal quality in the form of signal-to-noise ratio) of the PC_1's transmitted signal at the UE based on the PC_1's transmit power P_{PC_1} and the above distance, and determine the connection quality between the UE and PC_1 based on the two received signal qualities.

The above exemplary processing of the pre-selection unit 630 is also applicable to determining the second connection quality between the candidate for primary base station and the candidate for secondary base station and the third connection quality between the candidate for secondary base station and the user equipment, which will not be described in detail here. Since the process of obtaining the estimated connection quality by the pre-selection unit is simpler than the process of obtaining the estimated connection time by the selection unit, using the pre-selection unit to perform preliminary selection based on the estimated connection quality is beneficial to reducing the processing load of the electronic device.

Optionally, in order to determine the connection quality, the electronic device 600 can, for example, control the communication unit 620 via the pre-selection unit 630 to communicate with candidate primary base stations, candidate secondary base stations, user equipment, etc. that serve as connection subjects, so as to obtain required information from these connection subjects, such as but not limited to the location, transmission power, etc., of the connection subject.

### [2.3 Third configuration example]

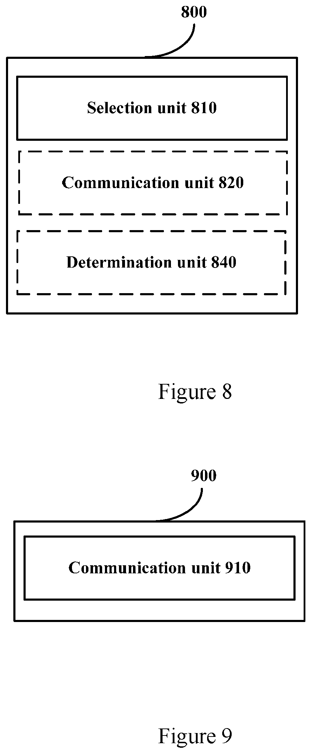

Figure 8 is a block diagram showing a third configuration example of the electronic device according to the first embodiment of the present disclosure.

As shown in Figure 8, in addition to units 810, 820 corresponding to the selection unit 210 and the optional communication unit 220 of Figure 2, the electronic device 800 may further include an optional determination unit 840. Note that the units 810 and 820 of the electronic device 800 can perform functions similar to those of the corresponding units of the electronic device , and therefore, only the difference, namely, the determination unit 840, is described herein. The determination unit 840 may be configured to determine the primary base station and the secondary base station serving the user equipment based on measured signal qualities of the primary base stations and the secondary base stations selected by the selecting unit 810.

Referring back to the example of Figure 4. As shown in Figure 4, the core network device 5GC, for example, having the function of an electronic device 800, communicates with the ground station ES in the satellite communication network and, for example, communicates with various devices in the non-ground network, and has selected the primary base station PC_2 and the secondary base stations SC_22 and SC_23 for the ground user equipment UE through the selection processing of the selection unit 810 based on the estimated connection time. The pre-selection unit 830 may make a final determination on the candidate primary/secondary base stations based on the measured signal qualities for these primary/secondary base stations.

### (Example of measured signal quality)

In one example, the measured signal quality considered by the determination unit 840 of the electronic device 800 includes a first signal quality of a signal between the selected primary base station and the user equipment and a second signal quality of a signal between the selected primary base station and the selected secondary base station. For example, in the example of Figure 4, the measured signal qualities for the selected primary base station PC_2 and the selected secondary base station SC_22 or SC_23 may include a first signal quality Ma_2 between PC_2 and the UE and a second connection quality Mb_22 or Mb_23 between PC_2 and SC_22 or SC_23.

In a further preferred example, the measured signal quality may also include a third signal quality of a signal between the selected secondary base station and the user equipment. For example, in the example of Figure 4, the measured signal quality for the selected primary base station PC_2 and the selected secondary base station SC_22 or SC_23 may also include the third connection quality Mc_22 or Mc_23 between SC_22 or SC_23 and the UE.

### (Example process for final determination of primary and secondary base stations based on measured signal quality)

The determination unit 840 of the electronic device 800 may finally determine the primary and secondary base stations based on the measured signal qualities, i.e., the first, second, and optional third signal qualities mentioned above, in various appropriate ways.

In one example, the determination unit 840 can, for example, pre-set appropriate thresholds regarding signal quality (e.g., a first threshold Math, a second threshold Mbth, and an optional third threshold Mcth), and determine the selected primary and secondary base stations whose first, second (and optional third) signal qualities are all greater than the corresponding thresholds as the final primary and secondary base stations. Alternatively, the determination unit 840 may also, for example, perform a final determination of the primary/secondary base station among the selected primary/secondary base stations based on the first, second (and optional third) signal qualities in a manner similar to selecting the primary/secondary base station based on the first, second, and optional third connection times in the "Example processing for selecting primary and secondary base stations based on estimated connection time" section in the first configuration example above.

For the example shown in Figure 4, it is assumed that the first signal quality of the selected primary base station PC_2 satisfies Ma_2>Math with respect to the first threshold Math, the second signal qualities of the selected secondary base stations SC_22 and SC_23 respectively satisfy Mb_22>Mbth and Mb_23<Mbth with respect to the second threshold Mbth, and the third signal qualities of SC_22 and SC_23 respectively satisfy Mc_22>Mcth and Mc_23>Mcth with respect to the third threshold Mcth. At this time, the determination unit 840 may determine the primary base station PC_2 and its secondary base station SC_22 whose first and second (and optionally third) signal qualities are each greater than corresponding thresholds as the final primary and secondary base stations.

Since the actually measured signal quality can more accurately reflect the quality of the connection or signal between the connection entities, the final selection made by the determination unit based on the measured signal quality is conducive to improving the transmission quality of subsequent multi-connection transmission.

### (Example process for obtaining signal quality)

The electronic device 800 can interact with the user equipment, the candidate primary base station, and the candidate secondary base station via the communication unit 820 in various appropriate ways, and require these devices to measure the signal quality between each other to obtain signal qualities including, for example, the first to third signal qualities mentioned above.

For example, the electronic device 800 can control the communication unit 820 via the selection unit 810 or the determination unit 840 to send a notification to the user equipment via the current serving base station of the user equipment about the primary base station and the secondary base station selected for the user equipment and suitable for serving the user equipment, and send a notification to the selected primary base station and the secondary base station so that each device receiving the notification performs corresponding processing for measuring (first, second and optional third) signal quality.

As an example, the user equipment receiving the above notification can receive the test signals sent from the selected primary base station (and optionally, the selected secondary base station) and measure the signal quality of these test signals, such as measuring the first signal quality between the user equipment and the primary base station (and optionally, the third signal quality between the user equipment and the secondary base station). The selected primary base station and secondary base station that have received the notification may also send/receive a test signal to measure the second signal quality between the two.

After the user equipment, the selected primary base station and secondary base station complete the signal quality measurement, the result can be reported to the electronic device 800 on the network side, and the determination unit 840 of the electronic device 800 can determine the final primary base station and secondary base station based on the obtained measurement results.

Optionally, the electronic device 800 may control the communication unit 220 via the determination unit 840 to send a notification about the finally determined primary base station and secondary base station to the user equipment via the current serving base station of the user equipment, and send a notification to the finally determined primary base station and secondary base station. The user equipment receiving the notification can, for example, switch to the finally determined primary base station (primary cell), the finally determined primary base station can establish a connection with the finally determined secondary base station, the finally determined secondary base station can establish a connection with the user equipment, and multi-connection data transmission can be performed, that is, data can be transmitted from the network to the user equipment.

Note that the third configuration example described above in conjunction with Figure 8 can be combined with the second configuration example previously described in conjunction with Figure 6. That is, in a combined example, the electronic device can simultaneously include a pre-selection unit 630 such as shown in Figure 6 and a determination unit 840 such as shown in Figure 8, and implement corresponding processing, which will not be repeated here.

### [2.4 Fourth configuration example]

The fourth configuration example of the electronic device according to the first embodiment of the present disclosure may have a functional architecture similar to that of the previous first, second and/or third configuration examples, that is, have a similar processing unit, but may perform additional or different processing. Therefore, its block diagram is omitted here and the description focuses on its processing.

In the fourth configuration example, consider the case where the current secondary base station selected by the selection unit of the electronic device for the user equipment is a non-transparent satellite base station moving relative to the ground. In this case, due to the characteristics of the current secondary base station moving relative to the ground, after a period of time, the signal quality between it and the current primary base station and/or the user equipment on the ground may not meet the requirements of multiple connections or it may even be disconnected, that is, the current secondary base station is no longer suitable for multiple connections, resulting in the need to re-select the secondary base station. In this case, the electronic device of the fourth configuration example can select a backup secondary base station suitable for serving the user equipment, so as to replace the current secondary base station with the backup secondary base station or a secondary base station further determined from the backup secondary base stations when the current secondary base station is no longer suitable for multiple connections.

### (First example)

In the first example, the electronic device of the fourth configuration example may have a functional architecture similar to that of the first and/or second configuration examples, and may further select a backup secondary base station suitable for serving the user equipment by utilizing the processing based on the estimated connection time and/or estimated connection quality of its selection unit and/or pre-selection unit when the current secondary base station selected by the selection unit for the user equipment is a non-transparent satellite base station that moves relative to the ground.

For example, the selection unit and/or pre-selection unit of the electronic device may be configured to further select a backup secondary base station suitable for serving the user equipment based on an estimated connection time (e.g., a first connection time and an optional third connection time) and/or an estimated connection quality (e.g., a first connection quality and an optional third connection quality) between the candidate secondary base station and the current primary base station selected for the user equipment and/or the user equipment.

In one example, the electronic device may utilize its selection unit to select a candidate secondary base station with as long a connection time as possible as a backup secondary base station that may be used to replace the current secondary base station based on the first connection time between the candidate secondary base station and the current primary base station selected for the user equipment (and optionally, the third connection time between the candidate secondary base station and the user equipment). In another example, before making the above selection, the electronic device may utilize its (optional) pre-selection unit to select candidates for secondary base stations with a connection quality higher than a predetermined threshold as candidate secondary base stations based on the first connection quality between the candidates for secondary base stations and the current primary base station selected for the user equipment (and optionally, the third connection quality between the candidates for secondary base stations and the user equipment), so that the selection unit can select a backup secondary base station from these candidates for secondary base stations that may be used to replace the current secondary base station.

The selection unit and/or pre-selection unit of the electronic device can obtain the estimated connection time and/or estimated connection quality and make a selection based on the estimated connection time and/or estimated connection quality in a manner similar to that previously described in the first and/or second configuration examples, which will not be repeated here.

Optionally, the electronic device can use its selection unit to control its communication unit to send a notification about the backup secondary base station selected for the user equipment to the user equipment (and optionally to the current primary base station and the selected backup secondary base station), so as to facilitate the device receiving the notification to perform corresponding subsequent processing.

In an example, the backup secondary base station selected by the electronic device is a subsequent secondary base station used to replace the current secondary base station when the current secondary base station is no longer suitable for multiple connections. At this time, the notification about the selected backup secondary base station sent by the electronic device can, for example, enable the current primary base station to establish a connection with the backup secondary base station when the current secondary base station is no longer suitable for multiple connections, and the backup secondary base station to establish a connection with the user equipment, so as to perform multi-connection data transmission.

In another example, the backup secondary base station selected by the electronic device still needs to undergo a subsequent final determination, for example, a final determination based on measured signal quality as in a second example described later. At this time, the notification about the selected backup secondary base station sent by the electronic device may, for example, enable the user equipment, the current primary base station and the backup secondary base station to perform processing related to the subsequent final determination, which will be described in detail later.

### (Second example)

In a further second example, the electronic device of the fourth configuration example may additionally have a function similar to the determination unit in the third configuration example, in addition to having similar functions and performing similar processing as the first example, that is, may additionally have a determination unit. At this time, the determination unit of the electronic device can be configured to determine a subsequent secondary base station serving the user equipment based on the signal quality measured between the backup secondary base station selected by the selection unit and the current primary base station and/or the user equipment (for example, the first signal quality between the backup secondary base station and the current primary base station and the optional third signal quality between the backup secondary base station and the user equipment). Preferably, the signal quality is measured when the backup secondary base station is close to the current primary base station and/or the user equipment.

The determination unit of the electronic device may obtain the measured signal quality for the backup secondary base station and perform selection based on the measured signal quality in a manner substantially similar to the manner previously described in the third configuration example.

For example, the determination unit may determine a backup secondary base station whose measured signal quality (the first signal quality and the optional third signal quality) is greater than a corresponding threshold as a subsequent secondary base station. Alternatively, the determination unit may also, for example, determine the backup secondary base station with the highest measured signal quality as the final subsequent secondary base station. The backup secondary base station with the "highest measured signal quality" can be the backup secondary base station with the highest first signal quality; it can be the backup secondary base station with the highest sum of the first and third signal qualities among several backup secondary base stations with the highest first signal quality, and so on, and there is no restriction here.

In a preferred example of this example, the signal quality (e.g., first signal quality and optional third signal quality) between the backup secondary base station and the current primary base station and/or user equipment is measured when the backup secondary base station is close to the current primary base station and/or user equipment. To this end, the electronic device can interact with one or more of the user equipment, the current primary base station, and the backup secondary base station via the communication unit in various appropriate ways, requiring the relevant device to perform the required signal quality measurement to obtain, for example, the first signal quality and the optional third signal quality.

For example, the electronic device can control its communication unit via the selection unit or the determination unit to send a notification about the backup secondary base station selected for the user equipment to the current primary base station and the selected backup secondary base station (and optionally to the user equipment), so as to facilitate the device receiving the notification to measure the corresponding signal quality (the first signal quality and the optional third signal quality).

As an example, the determination unit of the electronic device and the current primary base station that receives the above notification can establish a first timer for each backup secondary base station, and the duration of the timer is the time required for the backup secondary base station to approach the current primary base station, that is, the time to reach the current primary base station close enough (for example, within a predetermined distance). Optionally, the determination unit of the electronic device and the user equipment that receives the notification may establish an optional second timer for each backup secondary base station, and the duration of the timer is the time required for the backup secondary base station to approach the user equipment. The determination unit of the electronic device can control the communication unit to send information to the backup secondary base station to instruct the backup secondary base station to send a test signal when the corresponding first or optional second timer expires, and correspondingly instruct the current primary base station or user equipment to measure the first signal quality or optional third signal quality between the backup secondary base station and the backup secondary base station. Note that in one example, the first timer may be used as the second timer. That is, the duration of the optional second timer established by the determination unit of the electronic device and the user equipment for each backup secondary base station can be the time required for the backup secondary base station to approach the current primary base station. Such a setting is based on the assumption that the current primary base station is close enough to the user equipment and is conducive to simplifying processing.

After the current primary base station (and optionally the user equipment) completes the measurement of the signal quality between the current primary base station and the backup secondary base station, the result may be reported to the electronic device on the network side, and the determination unit of the electronic device may determine the final subsequent secondary base station based on the obtained measurement result.

Optionally, the electronic device may control the communication unit via the determination unit to send a notification about the finally determined subsequent secondary base station to the user equipment, for example, via the current primary base station, and send the notification to the current primary base station and the subsequent secondary base station. Based on the above notification, when the current secondary base station is no longer suitable for multiple connections, the current primary base station can establish a connection with the subsequent secondary base station and the subsequent secondary base station can establish a connection with the user equipment, so as to perform data transmission for multiple connections.

### <3. Configuration Example of Electronic Device of Second Embodiment>

Corresponding to the configuration example of the electronic device on the network side of the above-mentioned first embodiment, a configuration example of the electronic device on the terminal side according to the second embodiment of the present disclosure will be described below. In the description of the above-mentioned first embodiment, it is obvious that the functions/processing of the electronic device on the terminal side have been described, and therefore, only an outline description is given here and unnecessary details are omitted.

### [3.1 First configuration example]

Figure 9 is a block diagram showing a first configuration example of an electronic device according to a second embodiment of the present disclosure.

As shown in Figure 9, the electronic device 900 may include a communication unit 910.

Here, each unit of the electronic device 900 may be included in a processing circuitry. It should be noted that the electronic device 900 may include one processing circuitry or multiple processing circuitries. Further, the processing circuitry may include various discrete functional units to perform various different functions and/or operations. It should be noted that these functional units may be physical entities or logical entities, and units with different names may be implemented by the same physical entity.

As an example, the electronic device 900 may be a user equipment itself, such as but not limited to a user equipment on the ground in a non-terrestrial network. Alternatively, the electronic device 900 may be an electronic device attached to the above-mentioned user equipment. In the following, for the convenience of description, the electronic device 900 is described as a user device on the ground in a non-ground network, but those skilled in the art will understand that the embodiments of the present disclosure are not limited thereto.

According to an embodiment of the present disclosure, the communication unit 910 of the electronic device 900 can receive a notification from a network side device about a primary base station and a secondary base station selected for a user equipment and suitable for serving the user equipment, wherein the primary base station and the secondary base station are determined by the network side device based on an estimated connection time for a candidate primary base station and a candidate secondary base station, and the candidate primary base station and the candidate secondary base station include at least one non-transparent satellite base station that moves relative to the ground. Of course, the candidate primary base stations and candidate secondary base stations considered by the network side device may also include other base station devices besides non-transparent satellite base stations that move relative to the ground, such as but not limited to GEO non-transparent satellite base stations, LEO/MEO transparent satellite-connected ground base stations, ground base stations, high-altitude platforms HAPS, and the like.

Here, the network side device that sends the notification to the electronic device 900 may be, for example, an electronic device on the network side in each configuration example of the first embodiment, and the primary base station and the secondary base station indicated in the notification may be appropriately selected based on the estimated connection time (and optionally based on the estimated connection quality) in the manner described in the first embodiment, which will not be repeated here. Note that in the process of the network side device selecting the primary base station/secondary base station for the electronic device 900 serving as a user device based on the estimated connection time (and optionally based on the estimated connection quality), the electronic device 900 can communicate or interact with the network side device via the communication unit 910, thereby reporting to the network side device the relevant information required for the estimated connection time (and optionally the estimated connection quality) according to the requirements of the network side device, such as but not limited to the location, transmission power, optional beam information, etc., of the electronic device 900.

For example, when a network side device (such as a core network device) wants to transmit a large amount of data to the electronic device 900 as a user device and expects to establish multiple connections for data transmission, the electronic device 900 can receive a notification about the primary base station and the secondary base station selected for it by the network side device, and can perform corresponding subsequent processing based on the received notification.

In an example, the primary base station and the secondary base station selected by the network-side device indicated in the notification received by the electronic device 900 are the primary base station and the secondary base station to be used in the multiple connections. At this time, the electronic device 900 that has received the notification about the selected primary base station and secondary base station may, for example, switch to the selected primary base station (primary cell). In addition, the selected primary base station that receives a similar notification from the network side device can establish a connection with the selected secondary base station, and the selected secondary base station that receives a similar notification from the network side device can establish a connection with the electronic device 900 as the user equipment. Therefore, multi-connection data transmission can be performed between the network side device and the electronic device 900.

In another example, the primary base station and the secondary base station selected by the network device indicated in the notification received by the electronic device 900 still need to undergo subsequent final determination, such as the final determination based on measured signal quality as in the second configuration described later. At this time, the electronic device 900 that receives the notification about the selected primary base station and secondary base station may, for example, perform processing related to the subsequent final determination, which will be described in detail later.

### [3.2 Second configuration example]

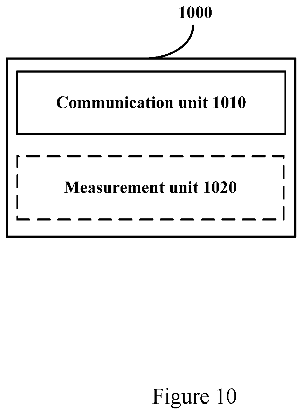

Figure 10 is a block diagram showing a second configuration example of the electronic device according to the second embodiment of the present disclosure.

As shown in Figure 10, in addition to a unit 1010 corresponding to the communication unit 910 of Figure 9, the electronic device 1000 may further include an optional measurement unit 1020. Note that the communication unit 1010 of the electronic device 1000 can perform functions similar to those of the corresponding unit of the electronic device 900, and therefore, only the differences, namely, the further configuration of the communication unit 1010 and the configuration of the measurement unit 1020, are described herein.

The measurement unit 1020 of the electronic device 1000 can be configured to measure the signal quality of the signal between the user equipment and the primary base station and/or the secondary base station selected for the user equipment, for example, the first signal quality between the user equipment and the primary base station selected for the user equipment, and optionally, the third signal quality between the user equipment and the secondary base station selected for the user equipment.

For example, the electronic device 1000 as a user equipment can use the communication unit 1010 to receive test signals from the selected primary base station (and optionally, the selected secondary base station) based on a notification or request received by the communication unit 1010 from the network side device via the current serving base station of the user equipment, and the measurement unit 1020 can measure the signal quality of these test signals, for example, measuring the first signal quality between the user equipment and the primary base station (and optionally, the third signal quality between the user equipment and the secondary base station).

In addition, the communication unit 1010 of the electronic device 1000 can be further configured to report the measured signal quality (first signal quality and optional third signal quality) obtained by the measurement unit 1020 to the network side device, so that the network side device can determine the primary base station and/or secondary base station serving the user equipment at least in part based on the measured signal quality. For example, the network-side device may perform the above determination in the various ways described in the third configuration example of the first embodiment, which will not be described in detail here.

In addition, the communication unit 1010 of the electronic device 1000 may be further configured to receive a notification about the finally determined primary base station and secondary base station from a network side device, for example, via a current serving base station of the electronic device 1000 as a user equipment. The electronic device 1000 that receives the notification may, for example, switch to the finally determined primary base station (primary cell). In addition, the finally determined primary base station that receives a similar notification from the network side device can establish a connection with the finally determined secondary base station, and the finally determined secondary base station that receives a similar notification from the network side device can establish a connection with the electronic device 1000 as the user equipment. Therefore, multi-connection data transmission can be performed between the network side device and the electronic device 1000.

### [3.3 Third configuration example]

The third configuration example of the electronic device according to the second embodiment of the present disclosure may have a functional architecture similar to that of the previous first or second configuration example, i.e. have a similar processing unit, but may perform additional or different processing. Therefore, its block diagram is omitted here and the description focuses on its processing.

In the third configuration example, consider the case where the current secondary base station selected by the network side device for the electronic device serving as the user equipment is a non-transparent satellite base station that moves relative to the ground. In this case, due to the characteristics of the current secondary base station moving relative to the ground, after a period of time, the signal quality between it and the current primary base station and/or the user equipment on the ground may not meet the requirements of multiple connections or it may even be disconnected, that is, the current secondary base station is no longer suitable for multiple connections, resulting in the need to re-select the secondary base station. In response to this situation, the electronic device of the third configuration example can receive a notification about a backup secondary base station suitable for serving the user equipment from the network side device, so that when the current secondary base station is no longer suitable for multiple connections, the current secondary base station can be replaced with the backup secondary base station or a secondary base station further determined from the backup secondary base stations. For example, the network-side device may determine the backup secondary base station in the various ways described in the fourth configuration example of the first embodiment, which will not be described in detail here.

### (First example)

In the first example, the backup secondary base station selected by the network side device for the electronic device as the user equipment is a subsequent secondary base station used to replace the current secondary base station when the current secondary base station is no longer suitable for multiple connections. In this case, the electronic device of the third configuration example may have a functional architecture similar to that of the first configuration example, and may receive a notification about the backup secondary base station from the network side device via the current primary base station. Based on the notification, when the current secondary base station is no longer suitable for multiple connections, the current primary base station can establish a connection with the backup secondary base station, and the backup secondary base station that receives a similar notification from the network side device can establish a connection with the user equipment. Therefore, the network side device and the electronic device can use the backup secondary base station to perform multi-connection data transmission.

### (Second example)

In a further second example, the backup secondary base station selected by the network side device for the electronic device serving as the user equipment still needs to undergo a subsequent final determination, such as a final determination based on measured signal quality.

For this situation, the electronic device of the third configuration example may, in addition to having similar functions and performing similar processing as the first example, additionally have functions similar to the measurement unit and communication unit in the second configuration example, that is, it may additionally have a measurement unit, and the communication unit may be further configured. At this time, the measurement unit of the electronic device may be configured to: preferably when the backup secondary base station is close to the user equipment, measure the signal quality (third signal quality) of the signal between the backup secondary base station and the user equipment.

The measurement unit of the electronic device may, for example, perform corresponding third signal quality measurement when appropriate based on the notification received from the network side device about the backup secondary base station selected for the user equipment.

As an example, the measurement unit of the electronic device can establish a timer for each backup secondary base station based on the notification from the network side device, and the duration of the timer is the time required for the backup secondary base station to approach the electronic device serving as the user equipment, that is, the time to reach the electronic device close enough (for example, within a predetermined distance). The network side device also correspondingly establishes a timer for each backup secondary base station, and instructs the backup secondary base station to send a test signal when the corresponding timer expires; the measurement unit of the electronic device can measure the signal quality of the test signal from the backup secondary base station received via the communication unit when the timer maintained by itself expires, that is, measure the third signal quality.

After the electronic device completes the measurement of the signal quality between it and the backup secondary base station using the measurement unit, the communication unit of the electronic device can be controlled to report the obtained measured signal quality to the network side device, so that the network side device can determine the subsequent secondary base station serving the user equipment at least partially based on the measured signal quality. For example, the network-side device may perform final determination of the subsequent secondary base station in the various ways described in the fourth configuration example of the first embodiment, which will not be described in detail here.

Optionally, the communication unit of the electronic device may also receive a notification about a subsequent secondary base station that is finally determined from the network side device, for example, via the current primary base station, and similar notifications are also sent to the current primary base station and the subsequent secondary base stations. Based on the notification, when the current secondary base station is no longer suitable for multiple connections, the current primary base station may establish a connection with the subsequent secondary base station, and the subsequent secondary base station may establish a connection with the user equipment. Therefore, the network side device and the electronic device can perform multi-connection data transmission using the subsequent secondary base station.

The above describes the example configuration and processing of the electronic device on the network side of the first embodiment, the example configuration and processing of the electronic device on the terminal side of the second embodiment, and the example interaction between the two and between the two and the base station devices (current serving base station, candidate primary base station, candidate secondary base station, etc.). It can be understood that through the above description, a communication system has actually been disclosed, which includes the electronic device on the network side of the first embodiment, the electronic device on the terminal side of the second embodiment, and the base station device that interacts with the two (current serving base station, candidate primary base station, candidate secondary base station, etc.), which will not be repeated here.

Next, some example processes of the preferred embodiments will be briefly described.

### <4. Example Processes>

### (Example of data transmission process using the embodiment of the present disclosure)

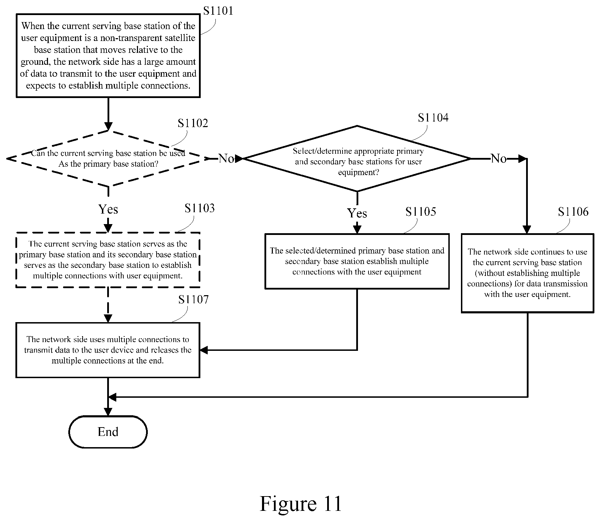

Figure 11 is a flowchart for illustrating an example of a process of a data transmission process utilizing an embodiment of the present disclosure, which can be implemented, for example, by processing of an electronic device of the first embodiment used as a network side device, processing of an electronic device of the second embodiment used as a user device, and interaction between the two and between the two and a base station device (current serving base station, candidate primary base station, candidate secondary base station, etc.).

As shown in Figure 11, first, in step S1101, when the current serving base station of the user equipment is a non-transparent satellite base station moving relative to the ground, the network side device has a large amount of data to transmit to the user equipment and expects to establish multiple connections.

Next, processing may proceed to optional step S1102. In step S1102, the network side device determines whether the current serving base station can be used as a primary base station.

If the judgment result in step S1102 is affirmative, the process proceeds to step S1103, and the current serving base station acts as a primary base station and its secondary base station acts as a secondary base station to establish multiple connections with the user equipment. Next, in step S1107, the network side device uses multiple connections to transmit data to the user equipment, and releases the multiple connections when finished, and the whole process ends.

If the result of the determination in step S1102 is negative, the process proceeds to step S1104, where the network-side device determines whether a suitable primary base station and secondary base station are selected/determined for the user equipment. If the determination result in step S1104 is positive, the process proceeds to step S1105, the selected/determined primary base station and secondary base station establish multiple connections with the user equipment, and then the process of step S1107 is performed. If the judgment result in step S1104 is negative, the process proceeds to step S1106, and the network side device continues to use the current serving base station (without establishing multiple connections) to perform data transmission with the user equipment.

Note that steps S1102 and S1103 in the above process example are optional, that is, step S1104 and subsequent processing can be performed directly after step S1101.

### (Process for selecting primary and secondary base stations based on estimated connection time)

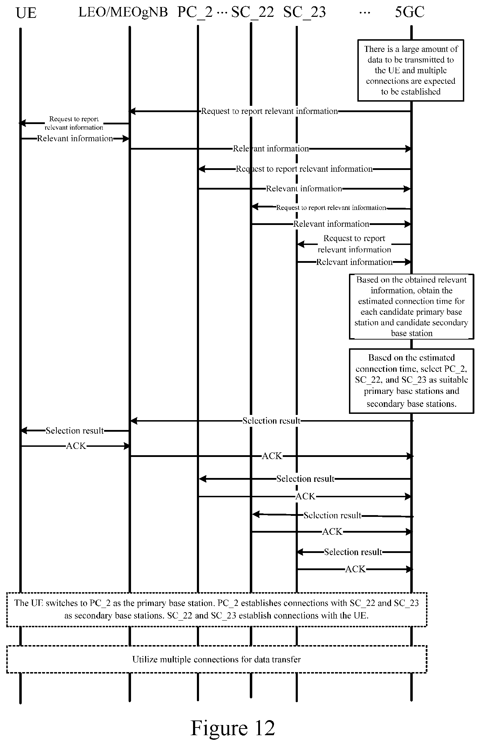

Figure 12 is an example flow chart for illustrating an example signaling interaction of a process for selecting a primary base station and a secondary base station based on an estimated connection time, which can be implemented, for example, by processing by an electronic device of the first embodiment used as a network side device 5GC, processing by an electronic device of the second embodiment used as a user equipment UE, and interaction between the two and between the two and the base station devices (current serving base station LEO/MEO gNB, candidate primary base station PC_2, candidate secondary base stations SC_22 and SC_23, etc.).

As shown in Figure 12, when the current serving base station of the user equipment UE is a non-transparent satellite base station that moves relative to the ground, namely, LEO/MEO gNB, the network side device 5GC requires the UE to report relevant information via the LEO/MEO gNB when a large amount of data is to be transmitted to the UE and multiple connections are expected to be established, and requires each candidate primary base station and candidate secondary base station to report relevant information. For ease of illustration, only one candidate primary base station PC_2 and two candidate secondary base stations SC_22 and SC_23 are shown here, but the example process also involves other candidate primary base stations and their candidate secondary base stations that are not shown.

Next, the network side device 5GC can obtain the estimated connection time of each candidate primary base station and candidate secondary base station based on the acquired relevant information, and select PC_2 and SC_22, SC_23 as suitable primary base station and secondary base stations based on the estimated connection time.

At this time, the network side device 5GC can send a notification about the selection result to the UE via the LEO/MEO gNB, and also send a notification about the selection result to PC_2, SC_22, and SC_23, and receive confirmation messages ACK from these devices.

Optionally, in an example, the selection result is a final determination result regarding the primary base station and the secondary base station, and the notification regarding the selection result also requires related devices to perform switching or connection. At this time, the UE receiving the notification can switch to PC_2 as the primary base station, PC_2 can establish connections with SC_22 and SC_23 as secondary base stations, and SC_22 and SC_23 can establish connections with the UE, thereby enabling multi-connection data transmission.

Although not shown in the figure, optionally, in another example, the selection result of the network side device 5GC is not the final result and requires further determination. At this time, the processing may not include the part of establishing multiple connections and performing data transmission, but may include other related processing.

In addition, although not shown in the figure, optionally, in another example, when the network side device 5GC has a large amount of data to be transmitted to the UE and expects to establish multiple connections, it first determines whether the current serving base station is suitable as the primary base station, and only performs the subsequent processing of Figure 12 when it determines that the current serving base station is not suitable.

In addition, although not shown in the figure, optionally, in another example, when the network side device 5GC has a large amount of data to be transmitted to the UE and expects to establish multiple connections, it first obtains relevant information of each candidate for primary base station and each candidate for secondary base station and obtains an estimated connection quality based on the relevant information, and then pre-selects a candidate primary base station and a candidate secondary base station based on the estimated connection quality, and then performs the subsequent processing of Figure 12 on the candidate primary base station and the candidate secondary base station.

### (Process of determining whether the current serving base station is suitable as the primary base station)

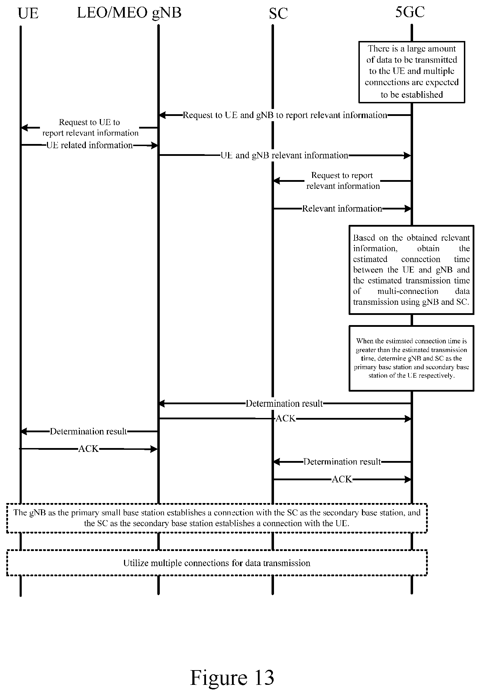

Figure 13 is an example flow chart of example signaling interactions for illustrating a process of determining whether a current serving base station is suitable as a primary base station, which can be implemented, for example, by processing by an electronic device of the first embodiment used as a network side device 5GC, processing by an electronic device of the second embodiment used as a user equipment UE, and interaction between the two and between the two and base station devices (current serving base station LEO/MEO gNB, candidate secondary base stations SC, etc.).

As shown in Figure 13, when the current serving base station of the user equipment UE is a non-transparent satellite base station that moves relative to the ground, namely LEO/MEO gNB, the network side device 5GC requires the UE, LEO/MEO gNB and possible secondary base stations (candidate secondary base stations) SC of the LEO/MEO gNB to report relevant information when a large amount of data is to be transmitted to the UE and multiple connections are expected to be established. For ease of illustration, only one possible secondary base station is shown here, but the example process may be similarly applicable to multiple secondary base stations.

Next, the network side device 5GC can obtain the estimated connection time between the UE and the LEO/MEO gNB based on the relevant information obtained, and obtain the estimated transmission time for multi-connection data transmission using the LEO/MEO gNB and the candidate secondary base station SC, and determine whether the LEO/MEO gNB and the candidate secondary base station SC are suitable as the primary base station and secondary base station for the UE based on these two times.

For example, as shown in Figure 13, the network side device 5GC can determine the LEO/MEO gNB and SC as the primary base station and secondary base station of the UE respectively when the estimated connection time is greater than or equal to the estimated transmission time. At this time, the network side device 5GC can send a notification about the determination result to the UE, LEO/MEO gNB and SC, and receive confirmation messages ACK from these devices. Optionally, the LEO/MEO gNB serving as a primary base station may establish a connection with the SC serving as a secondary base station, and the SC serving as a secondary base station may establish a connection with the UE, thereby enabling multi-connection data transmission.

Although not shown in the figure, if the network side device 5GC finds that the estimated connection time is less than the estimated transmission time, it can determine that the LEO/MEO gNB is not suitable as the primary base station for the UE. At this time, the process may be switched to processing for all candidate primary base stations and candidate secondary base stations, such as that shown in Figure 12 , which will not be described in detail here.

### (Process for determining primary and secondary base stations based on measured signal quality)

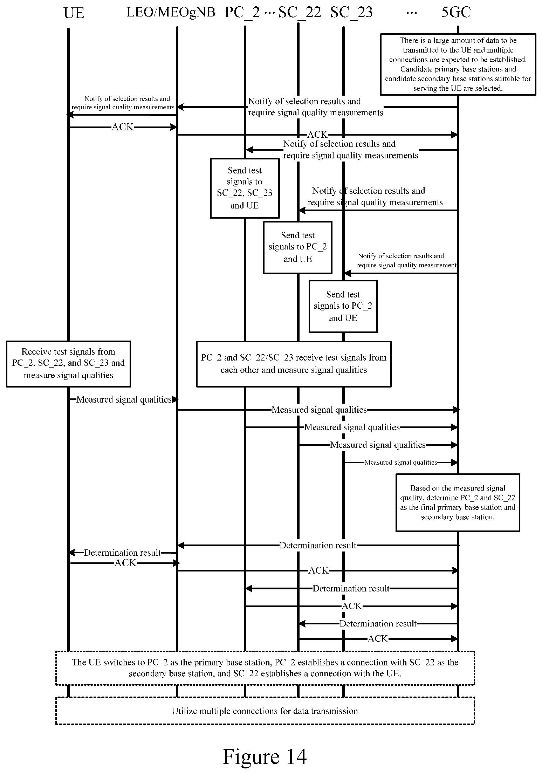

Figure 14 is an example flow chart for illustrating an example signaling interaction of a process for determining a primary base station and a secondary base station based on measuring signal quality, which can be implemented, for example, by processing by an electronic device of the third configuration of the first embodiment used as a network side device 5GC, processing by an electronic device of the second configuration of the second embodiment used as a user equipment UE, and interaction between the two and between the two and the base station devices (current serving base station LEO/MEO gNB, candidate primary base station PC_2, candidate secondary base stations SC_22 and SC_23, etc.).

As shown in Figure 14, when the current serving base station of the user equipment UE is a non-transparent satellite base station that moves relative to the ground, namely, LEO/MEO gNB, the network side device 5GC selects a candidate primary base station and a candidate secondary base station suitable for serving the UE, for example, through the example process of Figure 12, when a large amount of data is to be transmitted to the UE and multiple connections are expected to be established. Although only one selected candidate primary base station PC_2 and its two candidate secondary base stations SC_22 and SC_23 are shown here for the convenience of illustration, it is obviously not limited to this in actual application.

First, the network side device 5GC sends a notification about the selected candidate primary base station PC_2 and candidate secondary base stations SC_22 and SC_23 to the UE via the LEO/MEO gNB, so that the UE is ready to receive test signals from these base station devices and measure the signal quality.

In addition, the network side device 5GC sends a notification about the selection results to the selected candidate primary base station PC_2 and the candidate secondary base stations SC_22 and SC_23, so that the candidate primary base station PC_2 sends a test signal to the candidate secondary base stations SC_22 and SC_23 and the UE, and the candidate secondary base stations SC_22 and SC_23 send a test signal to the candidate primary base station PC_2 and the UE, and each of them prepares to receive the corresponding test signal and measure the signal quality.

Then, after completing their respective signal quality measurements, UE, PC_2, SC_22 and SC_23 report the measured signal quality to the network side device 5GC.

Next, the network side device 5GC may determine PC_2 and SC_22 as suitable primary and secondary base stations based on the acquired signal qualities.

At this time, the network side device 5GC can send a notification about the determination result to the UE via the LEO/MEO gNB, and also send a notification about the determination result to PC_2 and SC_22, and receive confirmation messages ACK from these devices.

Optionally, at this time, the UE can be switched to PC_2 as the primary base station, PC_2 can establish a connection with SC_22 as the secondary base station, and SC_22 can establish a connection with the UE, thereby enabling multi-connection data transmission.

### (Process for determining subsequent secondary base stations based on measured signal quality)

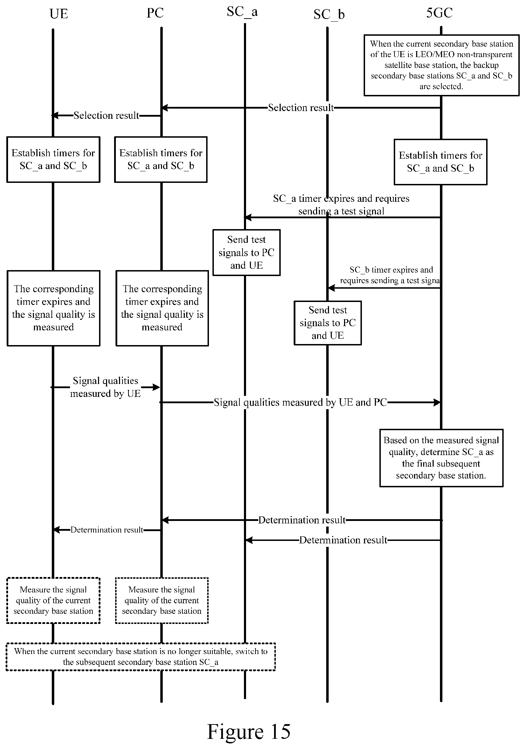

Figure 15 is an example flow chart for illustrating an example signaling interaction of a process for determining a subsequent secondary base station based on measured signal quality, which can be implemented, for example, by processing of an electronic device of the fourth configuration of the first embodiment used as a network side device 5GC, processing of an electronic device of the third configuration of the second embodiment used as a user equipment UE, and interaction between the two and between the two and the base station devices (current primary base station PC, backup secondary base station SC_a, etc.). Note that for simplicity of illustration, the current secondary base station is not shown here.

As shown in Figure 15, when the current secondary base station of the user equipment UE is a non-transparent satellite base station that moves relative to the ground, such as a LEO/MEO non-transparent satellite base station, the network side device 5GC selects a backup secondary base station suitable for serving the UE, for example, through the method previously described in the fourth configuration of the first embodiment. Although only two backup secondary base stations SC_a and SC_b are shown here for the convenience of illustration, it is obviously not limited to this in actual application.

Next, the network side device 5GC sends a notification about the selected backup secondary base stations SC_a and SC_b to the current primary base station PC, which notification may, for example, include at least the duration information of the timer for the backup secondary base station SC_a and the duration information of the timer for the backup secondary base station SC_b, wherein the duration information may indicate the time required for the corresponding backup secondary base station to approach the current primary base station PC, that is, the time to arrive close enough to the current primary base station (for example, within a predetermined distance). In addition, the network side device 5GC also sends a notification about the selected backup secondary base stations SC_a and SC_b to the UE via the current primary base station PC. The notification may, for example, include at least the duration information of the timer for the backup secondary base station SC_a and the duration information of the timer for the backup secondary base station SC_b. In order to simplify the processing, the duration information provided to the UE here may also indicate the time required for the corresponding backup secondary base station to approach the current primary base station PC. In other words, for a given backup secondary base station, the current primary base station PC and the UE may establish and maintain a timer of the same duration.

In addition, the network side device 5GC itself also establishes the above timer for each backup secondary base station, and sends a notification to the corresponding backup secondary base stations SC_a and SC_b when the corresponding timer expires, so that they send a test signal to the current primary base station PC and the user equipment UE.

In this way, the primary base station PC and the UE can receive the test signal from the corresponding backup secondary base station when the corresponding timer expires, and measure the signal quality. In addition, after completing their respective signal quality measurements, the PC and UE can report the measured signal quality to the network side device 5GC. For the sake of simplicity, the figure shows the measurement and reporting of the PC and UE respectively in a single box and a single reporting message, but the measurement is actually performed separately for the corresponding backup secondary base station when each timer expires, and the reporting can be performed separately or collectively, which is not limited here.

Next, the network side device 5GC may determine SC_a as the final subsequent secondary base station based on the acquired measured signal quality, for example.

Optionally, at this time, the network side device 5GC can send a notification about the determination result to the UE via the current primary base station PC, and also send a notification about the determination result to the subsequent secondary base station SC_a. Based on the above notification, optionally, when the signal quality of the current secondary base station measured by the current primary base station PC and/or the user equipment UE is no longer suitable for multiple connections, the current primary base station can establish a connection with the subsequent secondary base station SC_a, and the subsequent secondary base station SC_a can establish a connection with the user equipment (i.e., switch to the subsequent secondary base station SC_a), and multiple connection data transmission can be performed.

### <5.Method Examples>

Corresponding to the above-mentioned device embodiments, the present disclosure provides the following method embodiments.

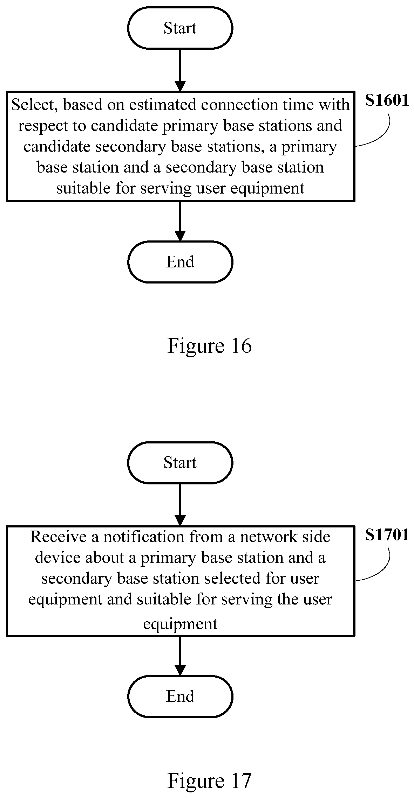

Figure 16 is a flowchart showing a process example of a method for wireless communication according to the first embodiment of the present disclosure.

As shown in Figure 16, in step S1601, based on the estimated connection time for the candidate primary base station and the candidate secondary base station, a primary base station and a secondary base station suitable for serving the user equipment are selected, wherein the candidate primary base station and the candidate secondary base station include at least one non-transparent satellite base station that moves relative to the ground.

As an example, the candidate primary base station may include a current serving base station of the user equipment which is a non-transparent satellite base station. In this case, although not shown in the figure, the method may further include: determining whether the current serving base station can serve as a primary base station suitable for serving the user equipment based on the estimated connection time between the current serving base station and the user equipment.

As an example, the estimated connection time may include a first connection time between the candidate primary base station and the user equipment and a second connection time between the candidate primary base station and the candidate secondary base station. Optionally, the estimated connection time may further include a third connection time between the candidate secondary base station and the user equipment.

As an example, in step S1601, when at least one of the two subjects is a non-transparent satellite base station moving relative to the ground, the connection time between the two subjects can be estimated based on the position and transmission power of each subject and the ephemeris diagram of the non-transparent satellite base station. In the case where the two subjects do not include a non-transparent satellite base station moving relative to the ground, the connection time between the two subjects can be estimated to be infinite, for example.

In addition, although not shown in the figure, the method may further include: for example, before step S1601, pre-selecting a candidate primary base station and a candidate secondary base station from the candidates for primary base stations and the candidates for secondary base stations based on estimated connection qualities of the candidates for primary base stations and the candidates for secondary base stations.

As an example, the estimated connection quality may include a first connection quality between the candidate for primary base station and the user equipment and a second connection quality between the candidate for primary base station and the candidate for secondary base station. Optionally, the estimated connection quality may further include a third connection quality between the candidate for secondary base station and the user equipment.

As an example, the connection quality between two subjects may be estimated based on the distance between the two subjects and the transmit power of each subject.

In addition, although not shown in the figure, the method may further include: for example, after step S1601, based on the measured signal qualities of the selected primary base station and secondary base station, determining the primary base station and the secondary base station serving the user equipment.

As an example, the measured signal quality may include measuring a first signal quality of a signal between the selected primary base station and the user equipment and a second signal quality of a signal between the selected primary base station and the selected secondary base station. Optionally, the measured signal quality may also include a third signal quality of a signal between the selected secondary base station and the user equipment.

In addition, although not shown in the figure, the method may also include: for example, after step S1601, when the current secondary base station selected for the user equipment is a non-transparent satellite base station that moves relative to the ground, further selecting a backup secondary base station suitable for serving the user equipment, based on the estimated connection time and/or estimated connection quality between the candidate secondary base station and the current primary base station selected for the user equipment and/or the user equipment. Optionally, the method may also include: determining a subsequent secondary base station serving the user equipment based on a signal quality measured between the backup secondary base station and the current primary base station and/or the user equipment, wherein the signal quality is measured when the backup secondary base station is close to the current primary base station and/or the user equipment.

According to an embodiment of the present disclosure, the subject executing the above method may be an electronic device according to various configurations of the first embodiment of the present disclosure, and therefore all the embodiments of the electronic device according to various configurations of the first embodiment of the present disclosure in the foregoing text are applicable hereto.

Figure 17 is a flowchart showing a process example of a method for wireless communication according to the second embodiment of the present disclosure.

As shown in Figure 17, in step S1701, a notification is received from a network side device about a primary base station and a secondary base station selected for a user equipment and suitable for serving the user equipment, wherein the primary base station and the secondary base station are determined by the network side device based on an estimated connection time of candidate primary base stations and candidate secondary base stations, wherein the candidate primary base stations and the candidate secondary base stations include at least one non-transparent satellite base station that moves relative to the ground.

Although not shown in the figure, the method may also include: for example, after step S1701, measuring the signal quality of the signal between the user equipment and the primary base station and/or the secondary base station selected for the user equipment; and reporting the measured signal quality to the network side device, so that the network side device determines the primary base station and/or the secondary base station serving the user equipment at least partially based on the measured signal quality.

In addition, although not shown in the figure, the method may also include: when the current secondary base station serving the user equipment is a non-transparent satellite base station that moves relative to the ground, receiving a notification about a backup secondary base station from a network side device; when the backup secondary base station is close to the user equipment, measuring the signal quality of the signal between the backup secondary base station and the user equipment; and reporting the measured signal quality to the network side device, so that the network side device determines a subsequent secondary base station to serve the user equipment based at least in part on the measured signal quality.

According to an embodiment of the present disclosure, the subject executing the above method may be an electronic device according to various configurations of the second embodiment of the present disclosure, and therefore all the embodiments of the electronic device according to various configurations of the second embodiment of the present disclosure in the foregoing text are applicable hereto.

### <6. Application Examples>

The technology of the present disclosure can be applied to various products.

For example, the electronic devices 200, 600, 800 of the various configurations of the first embodiment (and the electronic device of the fourth configuration) may be implemented as any type of control entity, for example, various types of servers, such as a tower server, a rack server, and a blade server. The electronic devices 200, 600, 800 (and the electronic device of the fourth configuration) may be a control module mounted on a server (such as an integrated circuit module including a single chip, and a card or blade inserted into a slot of a blade server).

In addition, the base station device that interacts with the electronic device on the network side of the first embodiment and the electronic device on the terminal side of the second embodiment can be implemented as any type of base station device, such as a macro eNB and a small eNB, and can also be implemented as any type of gNB (base station in a 5G system). A small eNB may be an eNB covering a cell smaller than a macro cell, such as a pico eNB, a micro eNB, and a home (femto) eNB. Alternatively, the base station may be implemented as any other type of base station, such as a NodeB and a Base Transceiver Station (BTS). The base station may include: a main body (also referred to as a base station device) configured to control wireless communication; and one or more remote radio heads (RRHs) provided at a location different from the main body. In addition, the base station device that interacts with the electronic device on the network side of the first embodiment and the electronic device on the terminal side of the second embodiment can also be implemented as any type of TRP. The TRP may have sending and receiving functions, for example, it may receive information from a user device and a base station device, and may also send information to a user device and a base station device. In a typical example, the TRP can provide services to the user equipment and is controlled by the base station equipment. Furthermore, TRP may have a structure similar to that of a base station device, or may only have a structure related to sending and receiving information in a base station device.

In addition, the electronic devices 900, 1000 of each configuration of the second embodiment (as well as the electronic devices of the third configuration) can be implemented as various user devices, which can be implemented as mobile terminals (such as smart phones, tablet personal computers (PCs), notebook PCs, portable game terminals, portable/dongle-type mobile routers, and digital camera devices) or vehicle-mounted terminals (such as car navigation devices). The user equipment may also be implemented as a terminal performing machine-to-machine (M2M) communication (also referred to as a machine type communication (MTC) terminal). Furthermore, the user equipment may be a wireless communication module (such as an integrated circuit module including a single chip) installed on each of the above-mentioned user equipments.

### [Application examples regarding control entities]

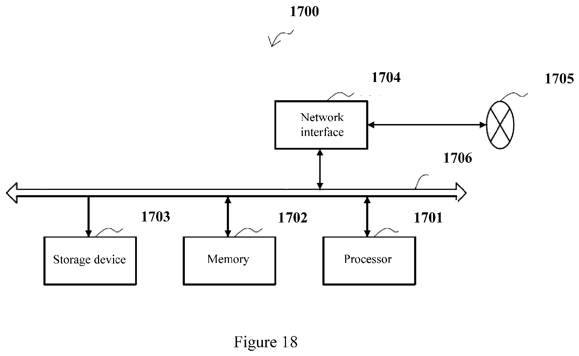

Figure 18 is a block diagram of an example of a server 1700 which can implement the electronic equipment 200 according to the present disclosure. The server 1700 includes a processor 1701, a memory 1702, a storage device 1703, a network interface 1704, and a bus 1706.

The processor 1701 may be, for example, a central processing unit (CPU) or a digital signal processor (DSP), and controls functions of the server 1700. The memory 1702 includes a random access memory (RAM) and a read-only memory (ROM), and stores data and a program executed by the processor 1701. The storage device 1703 may include a storage medium, such as a semiconductor memory and a hard disk.

The network interface 1704 is a wired communication interface for connecting the server 1700 to a wired communication network 1705. The wired communication network 1705 may be a core network such as an Evolved Packet Core (EPC), or a packet data network (PDN) such as the Internet.

The bus 1706 connects the processor 1701, the memory 1702, the storage device 1703, and the network interface 1704 to each other. The bus 1706 may include two or more buses having different speeds (such as a high-speed bus and a low-speed bus).

In the server 1700 shown in Figure 18, the selection unit in the electronic devices 200, 600, 800 (and the electronic devices of the fourth configuration) of the first embodiment previously described with reference to Figures 2, 6, and 8 can be implemented by the processor 1701, and the pre-selection unit of the electronic device 600 and the determination unit of the electronic device 800 (and the corresponding units of the electronic devices of the fourth configuration) can also be implemented by the processor 1701. For example, the processor 1701 can perform the functions of the above-mentioned selection unit, pre-selection unit, and/or determination unit by executing instructions stored in the memory 1702 or the storage device 1703. In addition, the communication unit in the electronic devices 200, 600, 800 can be implemented via the network interface 1704 and the like.

### [Application examples of a base station]

### (First application example)

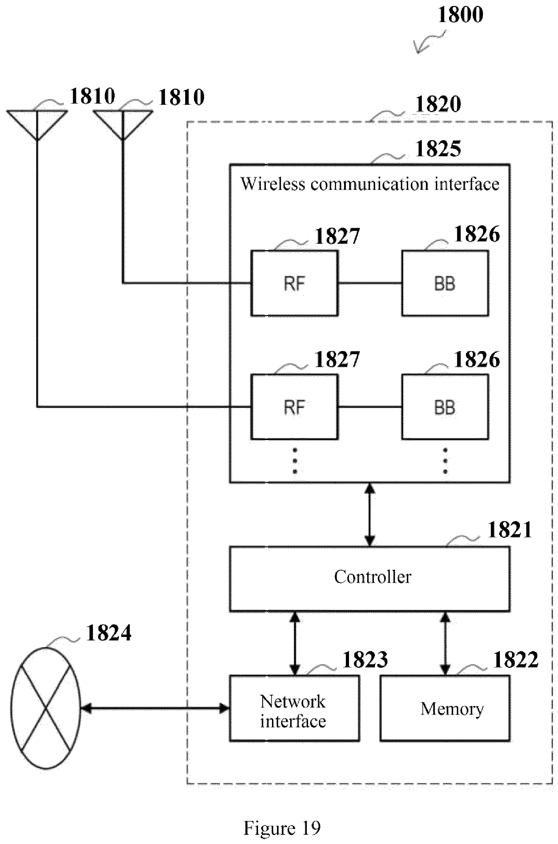

Figure 19 is a block diagram showing a first example of a schematic configuration of an eNB to which the technology of the present disclosure may be applied. The eNB 1800 includes a single or multiple antennas 1810 and a base station device 1820. The base station device 1820 and each of the antennas 1810 may be connected to each other via an RF cable.

Each of the antennas 1810 includes a single or multiple antenna elements (such as multiple antenna elements included in a multiple-input multiple-output (MIMO) antenna), and is used for the base station device 1820 to transmit and receive wireless signals. The eNB 1800 may include multiple antennas 1810, as shown in Figure 19. For example, the multiple antennas 1810 may be compatible with multiple frequency bands used by the eNB 1800. Although Figure 19 shows an example in which the eNB 1800 includes multiple antennas 1810, the eNB 1800 may include a single antenna 1810.

The base station device 1820 includes a controller 1821, a memory 1822, a network interface 1823, and a wireless communication interface 1825.

The controller 1821 may be, for example, a CPU or a DSP, and operates various functions of a higher layer of the base station device 1820. For example, the controller 1821 generates a data packet based on data in a signal processed by the wireless communication interface 1825, and transfers the generated packet via the network interface 1823. The controller 1821 may bundle data from multiple baseband processors to generate a bundled packet, and transfer the generated bundled packet. The controller 1821 may have logical functions of performing control such as radio resource control, radio bearer control, mobility management, admission control, and scheduling. The control may be performed in conjunction with an adjacent eNB or a core network node. The memory 1822 includes an RAM and an ROM, and stores a program executed by the controller 1821, and various types of control data (such as a terminal list, transmission power data, and scheduling data).

The network interface 1823 is a communication interface for connecting the base station device 1820 to a core network 1824. The controller 1821 may communicate with a core network node or another eNB via the network interface 1823. In this case, the eNB 1800, and the core network node or the other eNB may be connected to each other through a logical interface (such as an S1 interface and an X2 interface). The network interface 1823 may also be a wired communication interface or a wireless communication interface for a wireless backhaul line. In a case that the network interface 1823 is a wireless communication interface, the network interface 1823 may use a higher frequency band for wireless communication than a frequency band used by the wireless communication interface 1825.

The wireless communication interface 1825 supports any cellular communication scheme (such as Long Term Evolution (LTE) and LTE-Advanced), and provides wireless connection to a terminal positioned in a cell of the eNB 1800 via the antenna 1810. The wireless communication interface 1825 may typically include, for example, a baseband (BB) processor 1826 and a RF circuit 1827. The BB processor 1826 may perform, for example, encoding/decoding, modulating/demodulating and multiplexing/de-multiplexing, and perform various types of signal processes of layers (for example, L1, media access control (MAC), radio link control (RLC) and packet data convergence protocol (PDCP)). Instead of the controller 1821, the BB processor 1826 may have a part or all of the above logical functions. The BB processor 1826 may be a memory storing a communication control program, or a module including a processor and a related circuit configured to execute the program. Updating the program may change the functions of the BB processor 1826. The module may be a card or a blade inserted into a slot of the base station device 1820. Alternatively, the module may also be a chip mounted on the card or the blade. In addition, the RF circuit 1827 may include, for example, a frequency mixer, a filter and an amplifier, and transmit and receive wireless signals via the antenna 1810.

As shown in Figure 19, the wireless communication interface 1825 may include multiple BB processors 1826. For example, the multiple BB processors 1826 may be compatible with multiple frequency bands used by the eNB 1800. As shown in Figure 19, the wireless communication interface 1825 may include multiple RF circuits 1827. For example, the multiple RF circuits 1827 may be compatible with multiple antenna elements. Although Figure 19 shows an example in which the wireless communication interface 1825 includes multiple BB processors 1826 and multiple RF circuits 1827, the wireless communication interface 1825 may include a single BB processor 1826 or a single RF circuit 1827.

### (Second application example)

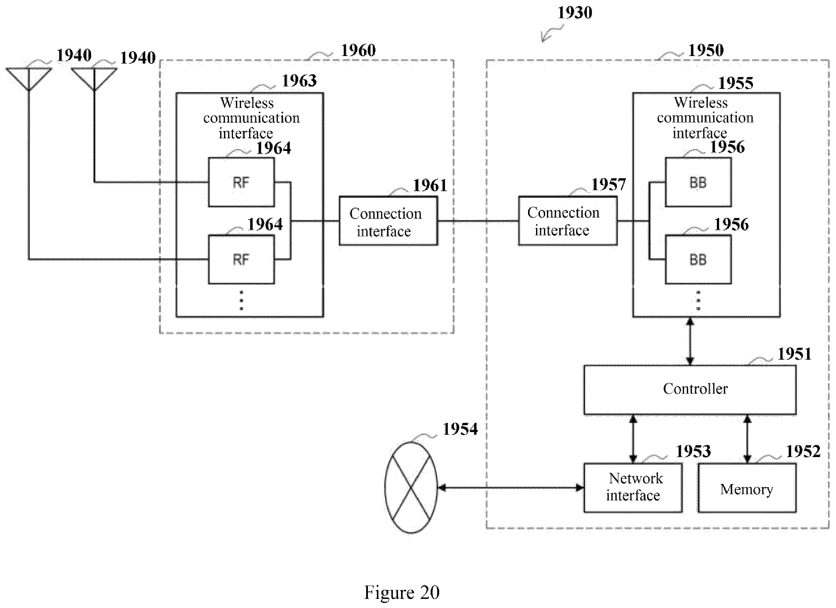

Figure 20 is a block diagram showing a second example of a schematic configuration of an eNB to which the technology of the present disclosure may be applied. The eNB 1930 includes a single or multiple antennas 1940, a base station device 1950 and an RRH 1960. The RRH 1960 and each antenna 1940 may be connected to each other via an RF cable. The base station device 1950 and the RRH 1960 may be connected to each other via a high-speed line such as an optical fiber cable.

Each of the antennas 1940 includes a single or multiple antenna elements (such as multiple antenna elements included in an MIMO antenna), and is used for the RRH 1960 to transmit and receive wireless signals. As shown in Figure 20, the eNB 1930 may include multiple antennas 1940. For example, the multiple antennas 1940 may be compatible with multiple frequency bands used by the eNB 1930. Although Figure 20 shows an example in which the eNB 1930 includes multiple antennas 1940, the eNB 1930 may include a single antenna 1940.

The base station device 1950 includes a controller 1951, a memory 1952, a network interface 1953, a wireless communication interface 1955, and a connection interface 1957. The controller 1951, the memory 1952, and the network interface 1953 are the same as the controller 1821, the memory 1822, and the network interface 1823 described with reference to Figure 19.

The wireless communication interface 1955 supports any cellular communication scheme (such as LTE and LTE-advanced), and provides wireless communication with a terminal located in a sector corresponding to the RRH 1960 via the RRH 1960 and the antenna 1940. The wireless communication interface 1955 may typically include, for example, a BB processor 1956. The BB processor 1956 is the same as the BB processor 1826 described with reference to Figure 19, except that the BB processor 1956 is connected to a RF circuit 1964 of the RRH 1960 via the connection interface 1957. As shown in Figure 20, the wireless communication interface 1955 may include multiple BB processors 1956. For example, the multiple BB processors 1956 may be compatible with multiple frequency bands used by the eNB 1930. Although Figure 20 shows an example in which the wireless communication interface 1955 includes multiple BB processors 1956, the wireless communication interface 1955 may include a single BB processor 1956.

The connection interface 1957 is an interface for connecting the base station device 1950 (the wireless communication interface 1955) to the RRH 1960. The connection interface 1957 may also be a communication module for communication in the above high-speed line that connects the base station device 1950 (the wireless communication interface 1955) to the RRH 1960.

The RRH 1960 includes a connection interface 1961 and a wireless communication interface 1963.

The connection interface 1961 is an interface for connecting the RRH 1960 (the wireless communication interface 1963) to the base station device 1950. The connection interface 1961 may also be a communication module for communication in the above high-speed line.

The wireless communication interface 1963 transmits and receives wireless signals via the antenna 1940. The wireless communication interface 1963 may typically include, for example, the RF circuit 1964. The RF circuit 1964 may include, for example, a frequency mixer, a filter and an amplifier, and transmit and receive wireless signals via the antenna 1940. The wireless communication interface 1963 may include multiple RF circuits 1964, as shown in Figure 20. For example, the multiple RF circuits 1964 may support multiple antenna elements. Although Figure 20 shows an example in which the wireless communication interface 1963 includes multiple RF circuits 1964, the wireless communication interface 1963 may include a single RF circuit 1964.

### [Application examples of a user equipment]

### (First application example)

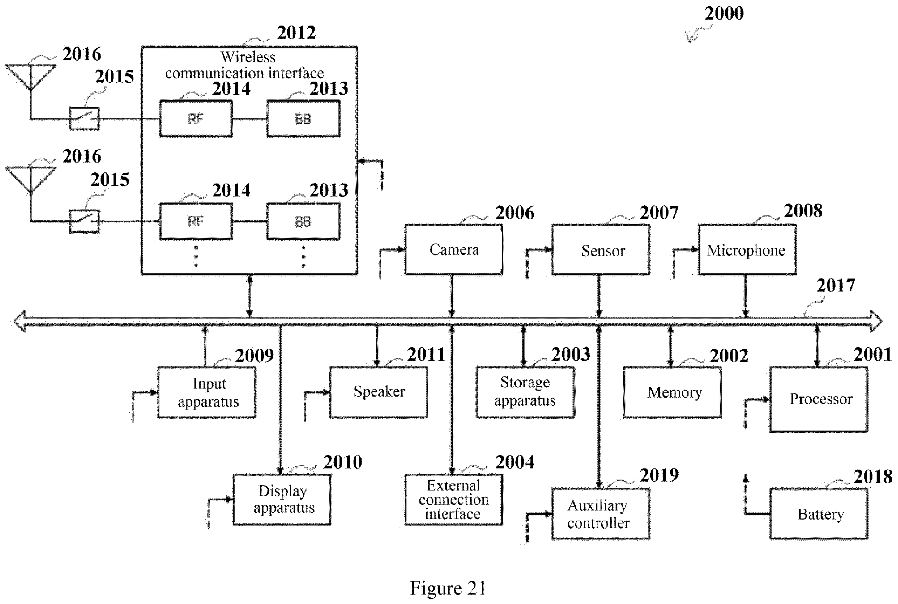

Figure 21 is a block diagram showing an example of a schematic configuration of a smartphone 2000 to which the technology of the present disclosure may be applied. The smartphone 2000 includes a processor 2001, a memory 2002, a storage apparatus 2003, an external connection interface 2004, a camera 2006, a sensor 2007, a microphone 2008, an input apparatus 2009, a display apparatus 2010, a speaker 2011, a wireless communication interface 2012, one or more antenna handovers 2015, one or more antennas 2016, a bus 2017, a battery 2018 and an auxiliary controller 2019.

The processor 2001 may be, for example, a CPU or a system on chip (SoC), and control functions of an application layer and another layer of the smartphone 2000. The memory 2002 includes an RAM and an ROM, and stores a program that is executed by the processor 2001, and data. The storage apparatus 2003 may include a storage medium such as a semiconductor memory and a hard disk. The external connection interface 2004 is an interface for connecting an external apparatus (such as a memory card and a universal serial bus (USB) apparatus) to the smartphone 2000.

The camera 2006 includes an image sensor (such as a charge coupled device (CCD) and a complementary metal oxide semiconductor (CMOS)) and generates a captured image. The sensor 2007 may include a group of sensors, such as a measurement sensor, a gyroscope sensor, a geomagnetic sensor and an acceleration sensor. The microphone 2008 converts sounds that are inputted to the smartphone 2000 into audio signals. The input apparatus 2009 includes, for example, a touch sensor configured to detect touch on a screen of the display apparatus 2010, a keypad, a keyboard, a button, or a handover, and receives an operation or information inputted from a user. The display apparatus 2010 includes a screen (such as a liquid crystal display (LCD) and an organic light-emitting diode (OLED) display), and displays an output image of the smartphone 2000. The speaker 2011 converts audio signals that are outputted from the smartphone 2000 to sounds.

The wireless communication interface 2012 supports any cellular communication scheme (such as LTE and LTE-Advanced), and performs wireless communications. The wireless communication interface 2012 may typically include, for example, a BB processor 2013 and a RF circuit 2014. The BB processor 2013 may perform, for example, encoding/decoding, modulating/demodulating and multiplexing/de-multiplexing, and perform various types of signal processing for wireless communications. Meanwhile, the RF circuit 2014 may include, for example, a frequency mixer, a filter and an amplifier, and transmit and receive wireless signals via the antenna 2016. The wireless communication interface 2012 may be a chip module on which the BB processor 2013 and the RF circuit 2014 are integrated. As shown in Figure 21, the wireless communication interface 2012 may include multiple BB processors 2013 and multiple RF circuits 2014. Although Figure 21 shows an example in which the wireless communication interface 2012 includes multiple BB processors 2013 and multiple RF circuits 2014, the wireless communication interface 2012 may include a single BB processor 2013 or a single RF circuit 2014.

Furthermore, in addition to the cellular communication scheme, the wireless communication interface 2012 may support another type of wireless communication scheme such as a short-distance wireless communication scheme, a near field communication scheme, and a wireless local area network (LAN) scheme. In this case, the wireless communication interface 2012 may include a BB processor 2013 and a RF circuit 2014 for each wireless communication scheme.

Each of the antenna handovers 2015 handovers a connection destination of the antenna 916 among multiple circuits (such as circuits for different wireless communication schemes) included in the wireless communication interface 2012.

Each of the antennas 2016 includes a single or multiple antenna elements (such as multiple antenna elements included in an MIMO antenna), and is used for the wireless communication interface 2012 to transmit and receive wireless signals. The smartphone 2000 may include multiple antennas 2016, as shown in Figure 21. Although Figure 21 shows an example in which the smartphone 2000 includes multiple antennas 2016, the smartphone 2000 may include a single antenna 2016.

Furthermore, the smartphone 2000 may include an antenna 2016 for each wireless communication scheme. In this case, the antenna handover 2015 may be omitted from the configuration of the smartphone 2000.

The processor 2001, the memory 2002, the storage apparatus 2003, the external connection interface 2004, the camera 2006, the sensor 2007, the microphone 2008, the input apparatus 2009, the display apparatus 2010, the speaker 2011, the wireless communication interface 2012 and the auxiliary controller 2019 are connected to each other via the bus 2017. The battery 2018 supplies power to blocks in the smartphone 2000 shown in Figure 21 via a feeder line which is indicated partially as a dashed line in Figure 21. The auxiliary controller 2019 operates a minimum necessary function of the smartphone 2000 in a sleeping mode, for example.

In the smartphone 2000 shown in Figure 21, the communication unit in the electronic devices 900, 1000 described above with reference to Figures 9 and 10 may be implemented through a wireless communication interface 2012 and an optional antenna 2016. The function of the measurement unit in the electronic device 1000 may be implemented by the processor 2001 or the auxiliary controller 2019 (or by controlling other related components). For example, the processor 2001 or the auxiliary controller 2019 may implement the function of the measurement unit by executing instructions stored in the memory 2002 or the storage apparatus 2003.

### (Second application example)

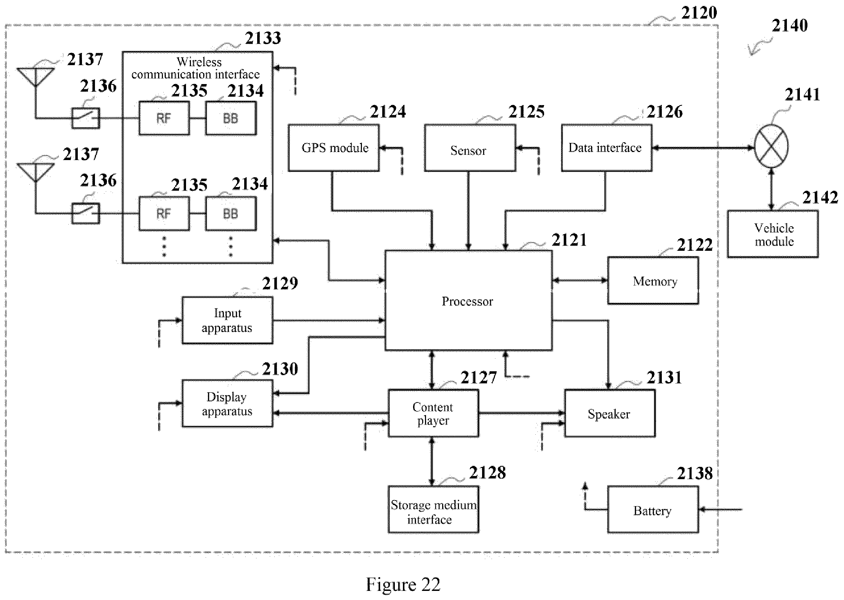

Figure 22 is a block diagram showing an example of a schematic configuration of a car navigation device 2120 to which the technology of the present disclosure may be applied. The car navigation device 2120 includes a processor 2121, a memory 2122, a global positioning system (GPS) module 2124, a sensor 2125, a data interface 2126, a content player 2127, a storage medium interface 2128, an input apparatus 2129, a display apparatus 2130, a speaker 2131, a wireless communication interface 2133, one or more antenna handovers 2136, one or more antennas 2137 and a battery 2138.

The processor 2121 may be, for example, a CPU or an SoC, and control a navigation function and another function of the car navigation device 2120. The memory 2122 includes an RAM and an ROM, and stores a program that is executed by the processor 2121, and data.

The GPS module 2124 measures a position (such as latitude, longitude and altitude) of the car navigation device 2120 based on a GPS signal received from a GPS satellite. The sensor 2125 may include a group of sensors such as a gyroscope sensor, a geomagnetic sensor, and an air pressure sensor. The data interface 2126 is connected to, for example, an in-vehicle network 2141 via a terminal not shown, and acquires data generated by the vehicle (such as vehicle speed data).

The content player 2127 reproduces content stored in a storage medium (such as a CD and a DVD) inserted into the storage medium interface 2128. The input apparatus 2129 includes, for example, a touch sensor configured to detect touch on a screen of the display apparatus 2130, a button, or a handover, and receives an operation or information inputted from a user. The display apparatus 2130 includes a screen such as an LCD or an OLED display, and displays an image of the navigation function or content that is reproduced. The speaker 2131 outputs sound of the navigation function or the content that is reproduced.

The wireless communication interface 2133 supports any cellular communication scheme (such as LTE and LTE-Advanced), and performs wireless communications. The wireless communication interface 2133 may typically include, for example, a BB processor 2134 and a RF circuit 2135. The BB processor 2134 may perform, for example, encoding/decoding, modulating/demodulating and multiplexing/de-multiplexing, and perform various types of signal processing for wireless communications. Meanwhile, the RF circuit 2135 may include, for example, a frequency mixer, a filter and an amplifier, and transmit and receive wireless signals via the antenna 2137. The wireless communication interface 2133 may also be a chip module on which the BB processor 2134 and the RF circuit 2135 are integrated. As shown in Figure 22, the wireless communication interface 2133 may include multiple BB processors 2134 and multiple RF circuits 2135. Although Figure 22 shows an example in which the wireless communication interface 2133 includes multiple BB processors 2134 and multiple RF circuits 2135, the wireless communication interface 2133 may include a single BB processor 2134 or a single RF circuit 2135.

Furthermore, in addition to the cellular communication scheme, the wireless communication interface 2133 may support another type of wireless communication scheme such as a short-distance wireless communication scheme, a near field communication scheme, and a wireless LAN scheme. In this case, the wireless communication interface 2133 may include a BB processor 2134 and a RF circuit 2135 for each type of wireless communication scheme.

Each of the antenna handovers 2136 handovers a connection destination of the antenna 2137 among multiple circuits (such as circuits for different wireless communication schemes) included in the wireless communication interface 2133.

Each of the antennas 2137 includes a single or multiple antenna elements (such as multiple antenna elements included in an MIMO antenna), and is used for the wireless communication interface 2133 to transmit and receive wireless signals. The car navigation device 2120 may include multiple antennas 2137, as shown in Figure 22. Although Figure 22 shows an example in which the car navigation device 2120 includes multiple antennas 2137, the car navigation device 2120 may include a single antenna 2137.

In addition, the car navigation device 2120 may include an antenna 2137 for each type of wireless communication scheme. In this case, the antenna handover 2136 may be omitted from the configuration of the car navigation device 2120.

The battery 2138 supplies power to blocks in the car navigation device 2120 shown in Figure 22 via a feeder line which is indicated partially as a dashed line in Figure 22. The battery 2138 accumulates power supplied from the vehicle.

In the car navigation device 2120 shown in Figure 22, In the car navigation device 2120 shown in Figure 22, the communication unit in the electronic devices 900, 1000 previously described with reference to Figures 9 and 10 may be implemented through a wireless communication interface 2133 and an optional antenna 2137. The function of the measurement unit in the electronic device 1000 may be implemented by the processor 2121 (or by controlling other related components). For example, the processor 2121 may implement the function of the measurement unit by executing instructions stored in the memory 2122.

The technology of the present disclosure may also be implemented as an in-vehicle system (or a vehicle) 2140 including one or more blocks of the car navigation device 2120, the in-vehicle network 2141 and a vehicle module 2142. The vehicle module 2142 generates vehicle data (such as vehicle speed, engine speed, and fault information), and outputs the generated data to the in-vehicle network 2141.

Preferred embodiments of the present disclosure have been described above with reference to the drawings. However, the present disclosure is not limited to the above examples. Those skilled in the art may make various changes and modifications within the scope of the appended claims, and it should be understood that such changes and modifications naturally fall within the technical scope of the present disclosure.

For example, a unit shown by a dotted line box in the functional block diagram in the drawings indicates that the functional unit is optional in the corresponding apparatus, and the optional functional units may be combined appropriately to achieve desired functions.

For example, multiple functions implemented by one unit in the above embodiments may be implemented by separate apparatuses. Alternatively, multiple functions implemented by respective units in the above embodiments may be implemented by separate apparatuses, respectively. In addition, one of the above functions may be implemented by multiple units. Such configurations are naturally included in the technical scope of the present disclosure.

In the specification, steps described in the flowchart include not only the processes performed chronologically as the described sequence, but also the processes performed in parallel or individually rather than chronologically. Furthermore, the steps performed chronologically may be performed in another sequence appropriately.

## Claims

1. A network side device (200), comprising:
processing circuitry (210, 220), configured to
select, based on estimated connection time for candidate primary base stations and candidate secondary base stations, a primary base station and a secondary base station suitable for serving a user equipment, wherein the candidate primary base stations and the candidate secondary base stations include at least one non-transparent satellite base station moving relative to the ground;
wherein the processing circuitry is further configured to: when the current secondary base station selected for the user equipment is a non-transparent satellite base station moving relative to the ground, further select a backup secondary base station suitable for serving the user equipment based on the estimated connection time and/or estimated connection quality between the candidate secondary base station and the current primary base station selected for the user equipment and/or the user equipment; and
wherein the processing circuitry is further configured to: determine a subsequent secondary base station serving the user equipment based on a signal quality measured for a signal between the backup secondary base station and the current primary base station and/or the user equipment, the signal quality being measured when the backup secondary base station is close to the current primary base station and/or the user equipment.

2. The network side device according to claim 1, wherein the candidate primary base stations include a current serving base station of the user equipment that is a non-transparent satellite base station, and the processing circuitry is further configured to: determine whether the current serving base station can be used as the primary base station suitable for serving the user equipment based on an estimated connection time between the current serving base station and the user equipment.

3. The network side device according to claim 1, wherein the estimated connection time includes a first connection time between the candidate primary base station and the user equipment and a second connection time between the candidate primary base station and the candidate secondary base station.

4. The network side device according to claim 3, wherein the estimated connection time further includes a third connection time between the candidate secondary base station and the user equipment.

5. The network side device according to any one of claims 2 to 4, wherein the processing circuitry is further configured to:
when at least one of two subjects under estimation is a non-transparent satellite base station moving relative to the ground, estimate the connection time between the two subjects based on a position and a transmission power of each subject and an ephemeris diagram of the non-transparent satellite base station, and/or
when two subjects under estimation do not include a non-transparent satellite base station moving relative to the ground, estimate the connection time between the two subjects to be infinite.

6. The network side device according to claim 1, wherein the processing circuitry is further configured to: pre-select a candidate primary base station and a candidate secondary base station from candidates for primary base station and candidates for secondary base station based on estimated connection qualities of the candidates for primary base station and the candidates for secondary base station.

7. The network side device according to claim 6, wherein the processing circuitry is further configured to estimate a connection quality between two subjects under estimation based on a distance between the two subjects and a transmission power of each subject.

8. The network side device according to claim 1, wherein the processing circuitry is further configured to: determine the primary base station and the secondary base station serving the user equipment based on a measured signal quality for the selected primary base station and secondary base station.

9. The network side device according to claim 8, wherein the measured signal quality includes a first signal quality of a signal between the selected primary base station and the user equipment and a second signal quality of a signal between the selected primary base station and the selected secondary base station.

10. A terminal side device (1000) comprising:
processing circuitry (1010, 1020), configured to
receive a notification from a network side device about a primary base station and a secondary base station selected for a user equipment and suitable for serving the user equipment,
wherein the primary base station and the secondary base station are determined by the network side device based on estimated connection time for candidate primary base stations and candidate secondary base stations, wherein the candidate primary base stations and the candidate secondary base stations include at least one non-transparent satellite base station moving relative to the ground; and
wherein the processing circuitry is further configured to:
when the current secondary base station serving the user equipment is a non-transparent satellite base station moving relative to the ground, receive a notification about the backup secondary base station from the network side device; and
when the backup secondary base station is close to the user equipment, measure a signal quality of a signal between the backup secondary base station and the user equipment; and
report the measured signal quality to the network side device, so that the network side device determines a subsequent secondary base station serving the user equipment based at least in part on the measured signal quality.

11. The terminal side device according to claim 10, wherein the processing circuitry is further configured to:
measure a signal quality of a signal between the user equipment and the primary base station and/or the secondary base station selected for the user equipment; and
report the measured signal quality to the network side device, so that the network side device determines the primary base station and/or the secondary base station serving the user equipment based at least in part on the measured signal quality.

12. A method for wireless communication by a network side device (200), comprising:
selecting (S1601), based on estimated connection time for candidate primary base stations and candidate secondary base stations, a primary base station and a secondary base station suitable for serving a user equipment, wherein the candidate primary base stations and the candidate secondary base stations include at least one non-transparent satellite base station moving relative to the ground; and
when the current secondary base station selected for the user equipment is a non-transparent satellite base station moving relative to the ground, further selecting a backup secondary base station suitable for serving the user equipment based on the estimated connection time and/or estimated connection quality between the candidate secondary base station and the current primary base station selected for the user equipment and/or the user equipment; and
determining a subsequent secondary base station serving the user equipment based on a signal quality measured for a signal between the backup secondary base station and the current primary base station and/or the user equipment, the signal quality being measured when the backup secondary base station is close to the current primary base station and/or the user equipment.

## Patentansprüche

1. Netzseitige Vorrichtung (200), umfassend:
eine Verarbeitungsschaltung (210, 220), die konfiguriert ist zum
Auswählen, basierend auf einer geschätzten Verbindungszeit für primäre Kandidatenbasisstationen und sekundäre Kandidatenbasisstationen, einer primären Basisstation und einer sekundären Basisstation, die zum Bedienen einer Benutzerausrüstung geeignet sind, wobei die primären Kandidatenbasisstationen und die sekundären Kandidatenbasisstationen mindestens eine nicht-transparente Satellitenbasisstation einschließen, die sich relativ zu dem Boden bewegt;
wobei die Verarbeitungsschaltung ferner konfiguriert ist zum: wenn die aktuelle sekundäre Basisstation, die für die Benutzerausrüstung ausgewählt ist, eine nicht-transparente Satellitenbasisstation ist, die sich relativ zu dem Boden bewegt, ferner Auswählen einer sekundären Backup-Basisstation, die zum Bedienen der Benutzerausrüstung geeignet ist, basierend auf der geschätzten Verbindungszeit und/oder der geschätzten Verbindungsqualität zwischen der sekundären Kandidatenbasisstation und der aktuellen primären Basisstation, die für die Benutzerausrüstung ausgewählt ist, und/oder der Benutzerausrüstung; und
wobei die Verarbeitungsschaltung ferner konfiguriert ist zum: Bestimmen einer nachfolgenden sekundären Basisstation, die die Benutzerausrüstung bedient, basierend auf einer Signalqualität, die für ein Signal zwischen der sekundären Backup-Basisstation und der aktuellen primären Basisstation und/oder der Benutzerausrüstung gemessen wird, wobei die Signalqualität gemessen wird, wenn sich die sekundäre Backup-Basisstation in der Nähe der aktuellen primären Basisstation und/oder der Benutzerausrüstung befindet.

2. Netzseitige Vorrichtung nach Anspruch 1, wobei die primären Kandidatenbasisstationen eine aktuelle bedienende Basisstation der Benutzerausrüstung einschließen, die eine nicht-transparente Satellitenbasisstation ist, und die Verarbeitungsschaltung ferner konfiguriert ist zum: Bestimmen, ob die aktuelle bedienende Basisstation als die primäre Basisstation verwendet werden kann, die zum Bedienen der Benutzerausrüstung geeignet ist, basierend auf einer geschätzten Verbindungszeit zwischen der aktuellen bedienenden Basisstation und der Benutzerausrüstung.

3. Netzseitige Vorrichtung nach Anspruch 1, wobei die geschätzte Verbindungszeit eine erste Verbindungszeit zwischen der primären Kandidatenbasisstation und der Benutzerausrüstung und eine zweite Verbindungszeit zwischen der primären Kandidatenbasisstation und der sekundären Kandidatenbasisstation einschließt.

4. Netzseitige Vorrichtung nach Anspruch 3, wobei die geschätzte Verbindungszeit ferner eine dritte Verbindungszeit zwischen der sekundären Kandidatenbasisstation und der Benutzerausrüstung einschließt.

5. Netzseitige Vorrichtung nach einem der Ansprüche 2 bis 4, wobei die Verarbeitungsschaltung ferner konfiguriert ist zum:
wenn mindestens eines von zwei zu schätzenden Subjekten eine nicht-transparente Satellitenbasisstation ist, die sich relativ zu dem Boden bewegt, Schätzen der Verbindungszeit zwischen den zwei Subjekten basierend auf einer Position und einer Übertragungsleistung jedes Subjekts und einem Ephemeridendiagramm der nicht-transparenten Satellitenbasisstation, und/oder
wenn zwei zu schätzende Subjekte keine nicht-transparente Satellitenbasisstation einschließen, die sich relativ zu dem Boden bewegt, Schätzen der Verbindungszeit zwischen den zwei Subjekten als unendlich.

6. Netzseitige Vorrichtung nach Anspruch 1, wobei die Verarbeitungsschalung ferner konfiguriert ist zum: Vorauswählen einer primären Kandidatenbasisstation und einer sekundären Kandidatenbasisstation aus Kandidaten für die primäre Basisstation und Kandidaten für die sekundäre Basisstation basierend auf geschätzten Verbindungsqualitäten der Kandidaten für die primäre Basisstation und der Kandidaten für die sekundäre Basisstation.

7. Netzseitige Vorrichtung nach Anspruch 6, wobei die Verarbeitungsschaltung ferner konfiguriert ist, um eine Verbindungsqualität zwischen zwei zu schätzenden Subjekten basierend auf einem Abstand zwischen den zwei Subjekten und einer Übertragungsleistung jedes Subjekts zu schätzen.

8. Netzseitige Vorrichtung nach Anspruch 1, wobei die Verarbeitungsschaltung ferner konfiguriert ist zum: Bestimmen der primären Basisstation und der sekundären Basisstation, die die Benutzerausrüstung bedienen, basierend auf einer gemessenen Signalqualität für die ausgewählte primäre Basisstation und die sekundäre Basisstation.

9. Netzseitige Vorrichtung nach Anspruch 8, wobei die gemessene Signalqualität eine erste Signalqualität eines Signals zwischen der ausgewählten primären Basisstation und der Benutzerausrüstung und eine zweite Signalqualität eines Signals zwischen der ausgewählten primären Basisstation und der ausgewählten sekundären Basisstation einschließt.

10. Endgerätseitige Vorrichtung (1000), umfassend:
Verarbeitungsschaltung (1010, 1020), die konfiguriert ist, um eine Benachrichtigung von einer netzseitigen Vorrichtung über eine primäre Basisstation und eine sekundäre Basisstation zu empfangen, die für eine Benutzerausrüstung ausgewählt sind und zum Bedienen der Benutzerausrüstung geeignet sind,
wobei die primäre Basisstation und die sekundäre Basisstation durch die netzseitige Vorrichtung basierend auf der geschätzten Verbindungszeit für primäre Kandidatenbasisstationen und sekundäre Kandidatenbasisstationen bestimmt werden, wobei die primären Kandidatenbasisstationen und die sekundären Kandidatenbasisstationen mindestens eine nicht-transparente Satellitenbasisstation einschließen, die sich relativ zu dem Boden bewegt; und
wobei die Verarbeitungsschaltung ferner konfiguriert ist zum:
wenn die aktuelle sekundäre Basisstation, die die Benutzerausrüstung bedient, eine nicht-transparente Satellitenbasisstation ist, die sich relativ zu dem Boden bewegt, Empfangen einer Benachrichtigung über die sekundäre Backup-Basisstation von der netzseitigen Vorrichtung; und
wenn die sekundäre Backup-Basisstation in der Nähe der Benutzerausrüstung ist, Messen einer Signalqualität eines Signals zwischen der sekundären Backup-Basisstation und der Benutzerausrüstung; und
Melden der gemessenen Signalqualität an die netzseitige Vorrichtung, so dass die netzseitige Vorrichtung eine nachfolgende sekundäre Basisstation, die die Benutzerausrüstung bedient, basierend mindestens teilweise auf der gemessenen Signalqualität bestimmt.

11. Endgerätseitige Vorrichtung nach Anspruch 10, wobei die Verarbeitungsschaltung ferner konfiguriert ist zum:
Messen einer Signalqualität eines Signals zwischen der Benutzerausrüstung und der primären Basisstation und/oder der sekundären Basisstation, die für die Benutzerausrüstung ausgewählt ist; und
Melden der gemessenen Signalqualität an die netzseitige Vorrichtung, so dass die netzseitige Vorrichtung die primäre Basisstation und/oder die sekundäre Basisstation, die die Benutzerausrüstung bedient, basierend mindestens teilweise auf der gemessenen Signalqualität bestimmt.

12. Verfahren für eine drahtlose Kommunikation durch eine netzseitige Vorrichtung (200), umfassend:
Auswählen (S1601), basierend auf der geschätzten Verbindungszeit für die primären Kandidatenbasisstationen und die sekundären Kandidatenbasisstationen, einer primären Basisstation und einer sekundären Basisstation, die zum Bedienen einer Benutzerausrüstung geeignet sind, wobei die primären Kandidatenbasisstationen und die sekundären Kandidatenbasisstationen mindestens eine nicht-transparente Satellitenbasisstation einschließen, die sich relativ zu dem Boden bewegt; und
wenn die aktuelle sekundäre Basisstation, die für die Benutzerausrüstung ausgewählt ist, eine nicht-transparente Satellitenbasisstation ist, die sich relativ zu dem Boden bewegt, ferner Auswählen einer sekundären Backup-Basisstation, die zum Bedienen der Benutzerausrüstung geeignet ist, basierend auf der geschätzten Verbindungszeit und/oder der geschätzten Verbindungsqualität zwischen der sekundären Kandidatenbasisstation und der aktuellen primären Basisstation, die für die Benutzerausrüstung ausgewählt ist, und/oder der Benutzerausrüstung; und
Bestimmen einer nachfolgenden sekundären Basisstation, die die Benutzerausrüstung bedient, basierend auf einer Signalqualität, die für ein Signal zwischen der sekundären Backup-Basisstation und der aktuellen primären Basisstation und/oder der Benutzerausrüstung gemessen wird, wobei die Signalqualität gemessen wird, wenn sich die sekundäre Backup-Basisstation in der Nähe der aktuellen primären Basisstation und/oder der Benutzerausrüstung befindet.

## Revendications

1. Dispositif côté réseau (200), comprenant :
un système de circuits de traitement (210, 220), configuré pour
sélectionner, sur la base d'un temps de connexion estimé pour des stations de base primaires candidates et des stations de base secondaires candidates, une station de base primaire et une station de base secondaire adaptée pour desservir un équipement utilisateur, dans lequel les stations de base primaires candidates et les stations de base secondaires candidates comportent au moins une station de base satellite non transparente se déplaçant par rapport au sol ;
dans lequel le système de circuits de traitement est en outre configuré pour : lorsque la station de base secondaire actuelle sélectionnée pour l'équipement utilisateur est une station de base satellite non transparente se déplaçant par rapport au sol, sélectionner en outre une station de base secondaire de secours adaptée pour desservir l'équipement utilisateur sur la base du temps de connexion estimé et/ou d'une qualité de connexion estimée entre la station de base secondaire candidate et la station de base primaire actuelle sélectionnée pour l'équipement utilisateur et/ou l'équipement utilisateur ; et
dans lequel le système de circuits de traitement est en outre configuré pour : déterminer une station de base secondaire suivante desservant l'équipement utilisateur sur la base d'une qualité de signal mesurée pour un signal entre la station de base secondaire de secours et la station de base primaire actuelle et/ou l'équipement utilisateur, la qualité de signal étant mesurée lorsque la station de base secondaire de secours est proche de la station de base primaire actuelle et/ou de l'équipement utilisateur.

2. Dispositif côté réseau selon la revendication 1, dans lequel les stations de base primaires candidates comportent une station de base de desserte actuelle de l'équipement utilisateur qui est une station de base satellite non transparente, et le système de circuits de traitement est en outre configuré pour : déterminer si la station de base de desserte actuelle peut être utilisée en tant que station de base primaire adaptée pour desservir l'équipement utilisateur sur la base d'un temps de connexion estimé entre la station de base de desserte actuelle et l'équipement utilisateur.

3. Dispositif côté réseau selon la revendication 1, dans lequel le temps de connexion estimé comporte un premier temps de connexion entre la station de base primaire candidate et l'équipement utilisateur et un deuxième temps de connexion entre la station de base primaire candidate et la station de base secondaire candidate.

4. Dispositif côté réseau selon la revendication 3, dans lequel le temps de connexion estimé comporte en outre un troisième temps de connexion entre la station de base secondaire candidate et l'équipement utilisateur.

5. Dispositif côté réseau selon l'une quelconque des revendications 2 à 4, dans lequel le système de circuits de traitement est en outre configuré pour :
lorsqu'au moins l'un des deux sujets sous estimation est une station de base satellite non transparente se déplaçant par rapport au sol, estimer le temps de connexion entre les deux sujets sur la base d'une position et d'une puissance de transmission de chaque sujet et d'un diagramme d'éphémérides de la station de base satellite non transparente, et/ou
lorsque deux sujets sous estimation ne comportent pas une station de base satellite non transparente se déplaçant par rapport au sol, estimer le temps de connexion entre les deux sujets comme étant infini.

6. Dispositif côté réseau selon la revendication 1, dans lequel le système de circuits de traitement est en outre configuré pour : présélectionner une station de base primaire candidate et une station de base secondaire candidate parmi des candidats pour station de base primaire et des candidats pour station de base secondaire sur la base de qualités de connexion estimées des candidats pour station de base primaire et des candidats pour station de base secondaire.

7. Dispositif côté réseau selon la revendication 6, dans lequel le système de circuits de traitement est en outre configuré pour estimer une qualité de connexion entre deux sujets sous estimation sur la base d'une distance entre les deux sujets et d'une puissance de transmission de chaque sujet.

8. Dispositif côté réseau selon la revendication 1, dans lequel le système de circuits de traitement est en outre configuré pour : déterminer la station de base primaire et la station de base secondaire desservant l'équipement utilisateur sur la base d'une qualité de signal mesurée pour la station de base primaire et la station de base secondaire sélectionnées.

9. Dispositif côté réseau selon la revendication 8, dans lequel la qualité de signal mesurée comporte une première qualité de signal d'un signal entre la station de base primaire sélectionnée et l'équipement utilisateur et une seconde qualité de signal d'un signal entre la station de base primaire sélectionnée et la station de base secondaire sélectionnée.

10. Dispositif côté terminal (1000) comprenant :
un système de circuits de traitement (1010, 1020), configuré pour recevoir une notification en provenance d'un dispositif côté réseau concernant une station de base primaire et une station de base secondaire sélectionnées pour un équipement utilisateur et adaptées pour desservir l'équipement utilisateur,
dans lequel la station de base primaire et la station de base secondaire sont déterminées par le dispositif côté réseau sur la base d'un temps de connexion estimé pour des stations de base primaires candidates et des stations de base secondaires candidates, dans lequel les stations de base primaires candidates et les stations de base secondaires candidates comportent au moins une station de base satellite non transparente se déplaçant par rapport au sol ; et
dans lequel le système de circuits de traitement est en outre configuré pour :
lorsque la station de base secondaire actuelle desservant l'équipement utilisateur est une station de base satellite non transparente se déplaçant par rapport au sol, recevoir une notification concernant la station de base secondaire de secours en provenance du dispositif côté réseau ; et
lorsque la station de base secondaire de secours est proche de l'équipement utilisateur, mesurer une qualité de signal d'un signal entre la station de base secondaire de secours et l'équipement utilisateur ; et
signaler la qualité de signal mesurée au dispositif côté réseau, de sorte que le dispositif côté réseau détermine une station de base secondaire ultérieure desservant l'équipement utilisateur sur la base, au moins en partie, de la qualité de signal mesurée.

11. Dispositif côté terminal selon la revendication 10, dans lequel le système de circuits de traitement est en outre configuré pour :
mesurer une qualité de signal d'un signal entre l'équipement utilisateur et la station de base primaire et/ou la station de base secondaire sélectionnées pour l'équipement utilisateur ; et
signaler la qualité de signal mesurée au dispositif côté réseau, de sorte que le dispositif côté réseau détermine la station de base primaire et/ou la station de base secondaire desservant l'équipement utilisateur sur la base au moins en partie de la qualité de signal mesurée.

12. Procédé pour une communication sans fil par un dispositif côté réseau (200), comprenant :
la sélection (S1601), sur la base d'un temps de connexion estimé pour des stations de base primaires candidates et des stations de base secondaires candidates, d'une station de base primaire et d'une station de base secondaire adaptées pour desservir un équipement utilisateur, dans lequel les stations de base primaires candidates et les stations de base secondaires candidates comportent au moins une station de base satellite non transparente se déplaçant par rapport au sol ; et
lorsque la station de base secondaire actuelle sélectionnée pour l'équipement utilisateur est une station de base satellite non transparente se déplaçant par rapport au sol, la sélection en outre d'une station de base secondaire de secours adaptée pour desservir l'équipement utilisateur sur la base du temps de connexion estimé et/ou de la qualité de connexion estimée entre la station de base secondaire candidate et la station de base primaire actuelle sélectionnées pour l'équipement utilisateur et/ou l'équipement utilisateur ; et
la détermination d'une station de base secondaire ultérieure desservant l'équipement utilisateur sur la base d'une qualité de signal mesurée pour un signal entre la station de base secondaire de secours et la station de base primaire actuelle et/ou l'équipement utilisateur, la qualité de signal étant mesurée lorsque la station de base secondaire de secours est proche de la station de base primaire actuelle et/ou de l'équipement utilisateur.
